# EUROPEAN PATENT APPLICATION

(11) **EP 4 600 546 A1**
(43) Date of publication of application: **13.08.2025**
(21) Application number: 23874731.5
(22) Date of filing: 27.09.2023
(51) Int. Cl.: F21S 43/50, F21S 43/14, F21S 43/236, F21S 43/237, F21W 102/13, F21W 103/10, F21W 103/20, F21W 104/00, F21Y 115/10, F21Y 115/30

(54) **VEHICLE LIGHTING FIXTURE AND LIGHTING FIXTURE UNIT**

(30) Priority: 07.10.2022 JP 2022162579; 07.10.2022 JP 2022162581
(71) Applicant: Ichikoh Industries, Ltd., Isehara-shi, Kanagawa 259-1192 (JP)
(72) Inventor: DANURA Soichiro, Isehara-shi, Kanagawa 259-1192 (JP)
(74) Representative: Lewis Silkin LLP
(86) International application number: PCT/JP2023/035108
(87) International publication number: WO 2024/075603

(57) **Abstract**

Provided is a vehicle lighting fixture capable of achieving a three-dimensional appearance, and a lighting fixture unit capable of emitting light having uniform brightness. The vehicle lighting fixture includes: a light-emitting body; an inner lens that emits light from the light-emitting body to at least a front side; and a light-transmitting member positioned away from the inner lens, and provided with a light-blocking pattern that blocks a portion of the light from the inner lens. The lighting fixture unit includes: an annular light-guiding body having incident surfaces on the left and right sides formed facing outward in a left-right direction at locations each vertically offset from a central axis, and guides and emits light incident from the incident surfaces to the front side; and an inner lens disposed on the front side along the annular light-guiding body that emits light from the annular light-guiding body to the front side.

## Description

### TECHNICAL FIELD

The present invention relates to a vehicle lighting fixture and a lighting fixture unit.

### BACKGROUND ART

In recent years, vehicle lighting fixtures and lighting fixture units that emit light from a decorative part, such as an emblem provided on a vehicle, are known (for example, see PTL 1).

### CITATION LIST

### PATENT LITERATURE

PTL 1: Japanese Unexamined Patent Publication No. 2021-180094

### SUMMARY OF THE INVENTION

### PROBLEMS TO BE SOLVED BY THE INVENTION

In the configuration of PTL 1, light is emitted by attaching a pattern of an emblem to the surface of a light-emitting portion or the like. As a result, the pattern has a two-dimensional appearance. In contrast, light emission in which the pattern has a three-dimensional appearance is being sought. Furthermore, the configuration of PTL 1 is a configuration in which a light-guiding body that guides light to an annular light-emitting portion is divided into an upper side and a lower side. For this reason, in the light-emitting portion, the brightness of the divided parts in the light-guiding body tends to become low, making it difficult to emit light such that the brightness becomes uniform in a circumferential direction.

The present invention has been made in view of the above, and an object of the present invention is to provide a vehicle lighting fixture that is capable of achieving a three-dimensional appearance in a light-emitting state, and a lighting fixture unit that is capable of emitting light so as to have uniform brightness.

### MEANS FOR SOLVING THE PROBLEM

A vehicle lighting fixture according to the present invention includes: a light-emitting body; an inner lens that emits light from the light-emitting body to at least a front side in a vehicle front-rear direction; and a light-transmitting member that is disposed at a position away the inner lens on the front side, and which is formed with a light-blocking pattern that blocks a portion of light emitted from the inner lens.

In the vehicle lighting fixture described above, the light-blocking pattern is formed on a surface of the light-transmitting member that faces the inner lens.

In the vehicle lighting fixture described above, the inner lens has a shape extending in a vehicle front-rear direction, and emits light from an end surface disposed to an end portion on a front side in the vehicle front-rear direction and a part of a side surface extending from the end surface toward a back side, the part being connected to the end surface.

The vehicle lighting fixture described above further comprises an inner panel that covers the light-emitting body and a portion of the inner lens, wherein the inner lens is provided with a part of the side surface that emits light protruding from the inner panel toward the front side.

In the vehicle lighting fixture described above, the light-transmitting member has the light-blocking pattern disposed on an inner side of the inner lens in a front view.

The vehicle lighting fixture described above further comprises a housing that accommodates the light-emitting body and the inner lens, wherein the light-transmitting member is an outer lens that forms a lamp chamber together with the housing.

The vehicle lighting fixture described above, further comprises a light source, and a rod-shaped light-guiding body having an opposing surface that faces the light-emitting body, and which guides light from the light source and emits the light from the opposing surface to the light-emitting body, while also emitting the light from the light source from a side surface toward another optical member that is different from the light-emitting body before the light is guided to the opposing surface, wherein the light-emitting body emits light due to light emitted from the rod-shaped light-guiding body.

A lighting fixture unit according to the present invention comprises: an annular light-guiding body formed in an annular shape, which is formed with incident surfaces at single locations at positions on each of a left and right side and offset above and below a central axis, and facing toward an outer side in a radial direction in a left-right direction, and which guides light that enters from the incident surfaces and emits the light on a front side in a vehicle front-rear direction; and an inner lens disposed on a front side of the annular light-guiding body, which is formed in an annular shape along a shape of the annular light-guiding body, and which emits the light emitted from the annular light-guiding body toward a front side.

In the lighting fixture unit described above, the annular light-guiding body has an upper guide portion that upwardly guides light entering from the incident surface on an upper side with respect to the central axis, and a lower guide portion that downwardly guides light entering from the incident surface on a lower side with respect to the central axis.

The lighting fixture unit described above further comprises a holding portion that holds the annular light-guiding body and the inner lens with spacing in a vehicle front-rear direction.

The lighting fixture unit described above further comprises a light-blocking portion disposed from an inner peripheral portion of the annular light-guiding body to an inner peripheral portion of the inner lens.

In the lighting fixture unit described above, the annular light-guiding body has prisms that internally reflect light traveling inside toward a front side.

In the lighting fixture unit described above, the prisms are provided along a circumferential direction of a surface of the annular light-guiding body on a back side so as to leave spaces open in parts where the incident surfaces are provided.

In the lighting fixture unit described above, the prisms are consecutively provided in the circumferential direction of the annular light-guiding body in each of an upper part, which is positioned between the incident surfaces on each of the left and right side on an upper side, a lower part, which is positioned between the incident surfaces on each of the left and right side on a lower side, a left part, which is positioned between the incident surfaces on the upper and lower sides on the left side, and a right part, which is positioned between the incident surfaces on the upper and lower sides on the right side.

In the lighting fixture unit described above, the prisms are formed in a recessed state from a surface of the annular light-guiding body on a back side to a front side, and a depth at which the prisms are provided in the left part and the right part is deeper than that at which the prisms are provided in the upper part and the lower part.

In the lighting fixture unit described above, the prisms are provided in parts of a surface of the annular light-guiding body on a back side that is closer to an outer peripheral side.

In the lighting fixture unit described above, the prisms have a first prism, which internally reflects light arriving from one side in a circumferential direction, and a second prism, which internally reflects light arriving from another side in a circumferential direction.

In the lighting fixture unit described above, the annular light-guiding body has an annular concave portion along a circumferential direction in a surface on a front side, and the concave portion has a shape that is curved toward a back side in a cross-sectional view along a plane perpendicular to the circumferential direction.

A vehicle lighting fixture according to the present invention includes: the lighting fixture unit described above; a light source; and a rod-shaped light-guiding body having an end surface that faces the incident surfaces of the annular light-guiding body with spacing therebetween, guides light from the light source and emits the light from the end surface toward the incident surfaces of the annular light-guiding body, and which emits light from the light source toward a front side toward another unit that is different from the lighting fixture unit before the light is guided to the end surface.

In the vehicle lighting fixture described above, the annular light-guiding body is accommodated in a storage portion that surrounds an outer peripheral side, and the storage portion has a cover portion that surrounds a side direction of a part between the incident surfaces of the annular light-guiding body and the end surface of the rod-shaped light-guiding body.

### EFFECT OF THE INVENTION

According to the present invention, it is possible to provide a vehicle lighting fixture that is capable of achieving a three-dimensional appearance in a light-emitting state, and a lighting fixture unit that is capable of emitting light so as to have uniform brightness.

### BRIEF DESCRIPTION OF THE DRAWINGS

[FIG. 1] FIG. 1 is an exploded perspective view showing an example of a vehicle lighting fixture according to a first embodiment.
[FIG. 2] FIG. 2 is a front view showing an example of a vehicle lighting fixture according to the first embodiment.
[FIG. 3] FIG. 3 is a diagram showing a configuration along an A-A cross section in FIG. 2.
[FIG. 4] FIG. 4 is a diagram showing a configuration along a B-B cross section in FIG. 2.
[FIG. 5] FIG. 5 is a diagram showing a configuration along a C-C cross section in FIG. 2.
[FIG. 6] FIG. 6 is a diagram showing an example of an emblem light-emitting portion and a light-blocking pattern when viewed from a front side.
[FIG. 7] FIG. 7 is a diagram showing an example of a state where the vehicle lighting fixture has been illuminated.
[FIG. 8] FIG. 8 is a diagram showing an example of a state where the vehicle lighting fixture has been illuminated.
[FIG. 9] FIG. 9 is a diagram showing an example of a state where the vehicle lighting fixture has been illuminated.
[FIG. 10] FIG. 10 is a perspective view showing an example of a light-emitting state of the emblem light-emitting portion.
[FIG. 11] FIG. 11 is an exploded perspective view showing an example of a vehicle lighting fixture according to a second embodiment.
[FIG. 12] FIG. 12 is a front view showing an example of a vehicle lighting fixture according to the second embodiment.
[FIG. 13] FIG. 13 is a diagram showing a configuration along a D-D cross section in FIG. 12.
[FIG. 14] FIG. 14 is a diagram showing a configuration along an E-E cross section in FIG. 12.
[FIG. 15] FIG. 15 is a diagram showing a configuration along an F-F cross section in FIG. 12.
[FIG. 16] FIG. 16 is a diagram showing an example of an emblem light-guiding portion.
[FIG. 17] FIG. 17 is a diagram showing an example of an emblem light-guiding portion.
[FIG. 18] FIG. 18 is a diagram showing a configuration along a G-G cross section in FIG. 17.
[FIG. 19] FIG. 19 is a diagram showing a configuration along an H-H cross section in FIG. 16.
[FIG. 20] FIG. 20 is a diagram showing enlarged a portion of an emblem light-emitting unit.
[FIG. 21] FIG. 21 is a diagram showing an example of a state where the vehicle lighting fixture has been illuminated.
[FIG. 22] FIG. 22 is a diagram showing an example of a state where the vehicle lighting fixture has been illuminated.
[FIG. 23] FIG. 23 is a diagram showing an example of a state where the vehicle lighting fixture has been illuminated.
[FIG. 24] FIG. 24 is a diagram showing an example of light that is guided by the emblem light-guiding portion.

### MODE FOR CARRYING OUT THE INVENTION

### <First Embodiment>

Hereinafter, a first embodiment of a vehicle lighting fixture according to the present invention will be described based on the drawings. Note that the present invention is not limited to the present embodiment. Furthermore, the components in the following embodiment include those that can be easily replaced by those skilled in the art, and components that are substantially the same.

In the following description, each of the front-rear, up-down, and left-right directions are directions in a vehicle-mounted state where the vehicle lighting fixture has been mounted on a vehicle, and represent directions in a case where the traveling direction of the vehicle is viewed from the driver's seat. Note that, in the present embodiment, the up-down direction is parallel to the vertical direction, and the vehicle front-rear direction and the left-right direction are parallel to the horizontal direction. Furthermore, a center side of the vehicle in the left-right direction is referred to as the inner side of the vehicle, and a side portion side of the vehicle in the left-right direction is referred to as the outer side of the vehicle.

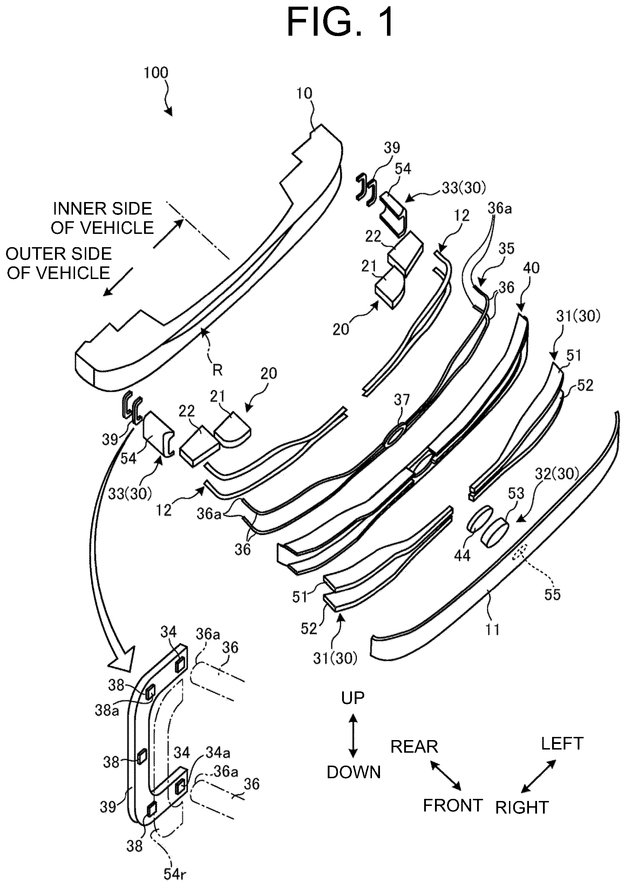

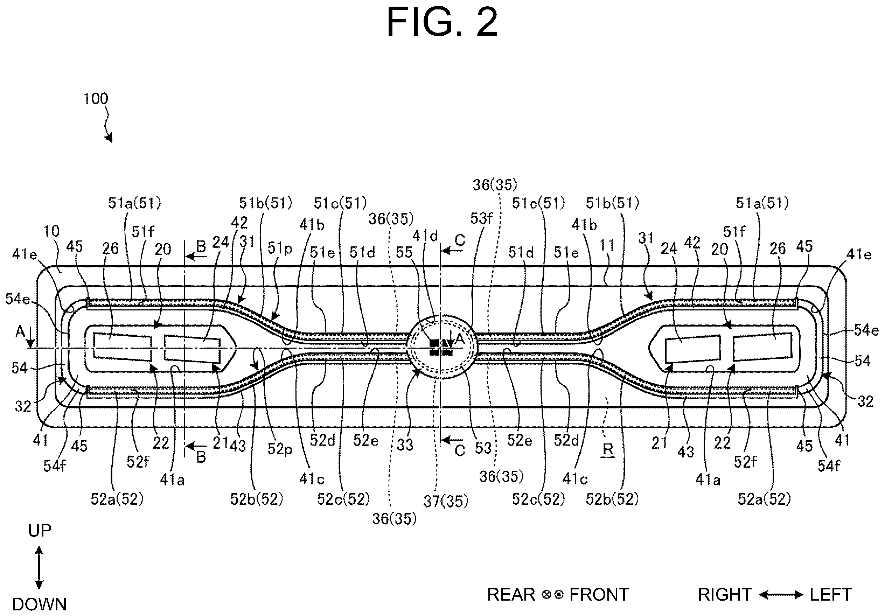

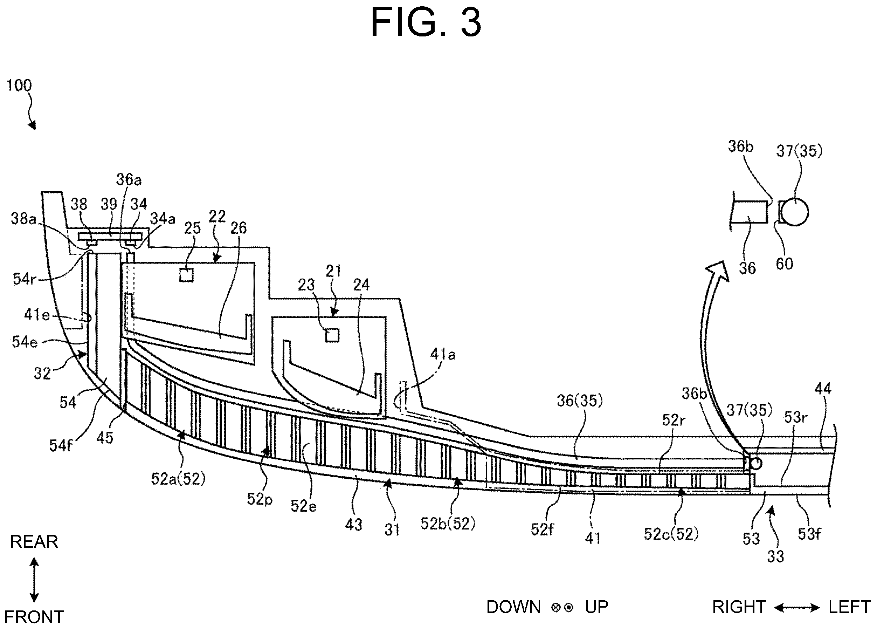

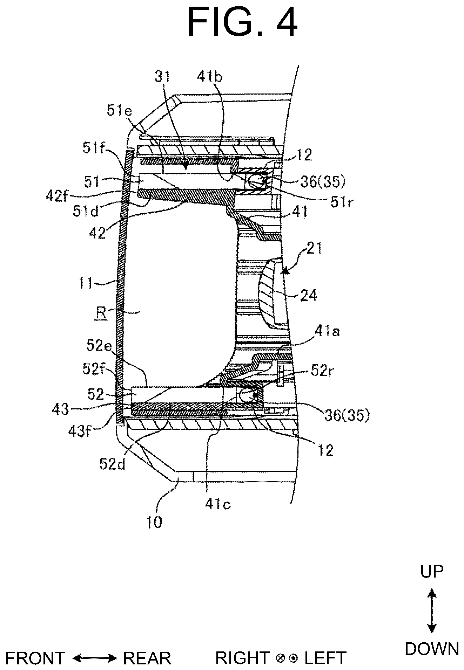

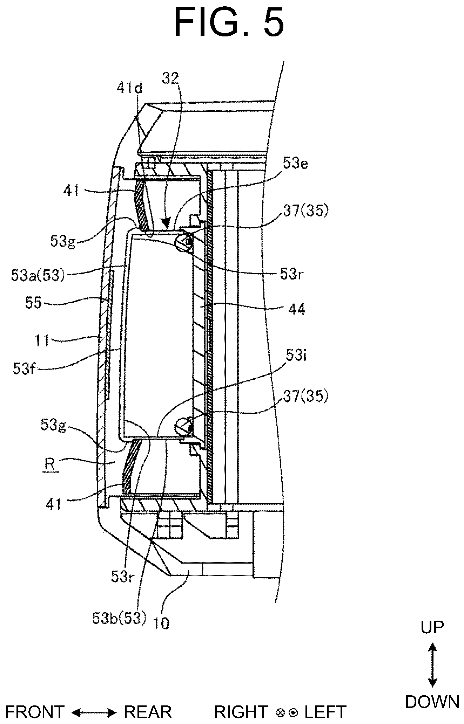

FIG. 1 is an exploded perspective view showing an example of a vehicle lighting fixture 100 according to a first embodiment. FIG. 2 is a front view showing an example of the vehicle lighting fixture 100 according to the first embodiment. FIG. 3 is a view showing a configuration along an A-A cross section in FIG. 2. FIG. 4 is a view showing a configuration along a B-B cross section in FIG. 2. FIG. 5 is a view showing a configuration along a C-C cross section in FIG. 2. As shown in FIGS. 1 to 5, the vehicle lighting fixture 100 includes a housing 10, headlight units 20, lighting fixture units 30, and an inner panel 40. The vehicle lighting fixture 100 has a symmetrical configuration in the left-right direction. In the present embodiment, the vehicle lighting fixture 100 is provided on a front portion of the vehicle. Therefore, in the description below, the vehicle front side is the front side and the vehicle rear side is the back side.

The housing 10 is provided spanning both sides of the front portion of the vehicle in the left-right direction. The housing 10 forms a single lamp chamber R with an outer lens (light-transmitting member) 11. The lamp chamber R includes a center portion of the front portion of the vehicle in the left-right direction, and is formed spanning both sides in the left-right direction. The lamp chamber R has a configuration that extends in a rectangular shape in the left-right direction in a front view.

The headlight units 20 are accommodated in the lamp chamber R. The headlight units 20 are disposed on each of the left and right on the front portion of the vehicle. The headlight units 20 irradiate a headlight pattern toward the vehicle front side. The headlight units 20 include a low beam unit 21 and a high beam unit 22.

The low beam unit 21 irradiates a low beam pattern as a headlight pattern toward the vehicle front side. The low beam unit 21 includes light sources 23 and irradiation portions 24. As the light sources 23, for example, semiconductor light sources such as LEDs, or laser light sources may be used. The irradiation portions 24 control the light distribution of the light emitted from the light sources 23, and irradiate the light toward the vehicle front side as a low beam pattern. As the irradiation portions 24, for example, reflectors or projection lenses may be used.

The high beam unit 22 irradiates a high beam pattern as a headlight pattern toward the vehicle front side. The high beam unit 22 is disposed, for example, further on the outer side of vehicle than the low beam unit 21. The high beam unit 22 includes light sources 25 and irradiation portions 26. As the light sources 25, for example, semiconductor light sources such as LEDs, or laser light sources may be used. The irradiation portions 26 control the light distribution of the light emitted from the light sources 25, and irradiate the light toward the vehicle front side as a high beam pattern. As the irradiation portions 26, for example, reflectors or projection lenses may be used.

The lighting fixture unit 30 includes a clearance lamp unit 31, an emblem light-emitting unit 32, and a turn lamp unit 33.

The clearance lamp unit 31 and the emblem light-emitting unit 32 are provided with shared light sources 34 and a light-guiding body 35. As the light sources 34, for example, semiconductor light sources such as LEDs, or laser light sources may be used. The light sources 34 are disposed such that a light-emitting surface 34a faces the vehicle front side. The light sources 34 emit light from the light-emitting surface 34a toward the vehicle front side. For example, two light sources 34 are provided on each of the left and right sides of the lamp chamber R. On each of the left and right sides, the two light sources 34 are disposed side-by-side on the upper and lower sides of a substrate 39. Note that the substrate 39 is shared between the clearance lamp unit 31, the emblem light-emitting unit 32, and the turn lamp unit 33.

The light-guiding body 35 guides the light emitted from the light sources 34. The light-guiding body 35 is provided in a state where, for example, the part other than the vehicle front side part is covered by a light-guiding body cover 12. The light-guiding body 35 includes a clearance light-guiding portion (rod-shaped light-guiding body) 36, and an emblem light-guiding portion (light-emitting body) 37.

The clearance light-guiding portion 36 includes incident surfaces 36a that face the light sources 34. The clearance light-guiding portion 36 extends toward the vehicle front side from the incident surfaces 36a, and is curved toward the inner side of the vehicle along upper clearance light-emitting portions 51 and lower clearance light-emitting portions 52 of the clearance lamp unit 31 described later. The clearance light-guiding portion 36 is disposed so as to overlap the upper clearance light-emitting portions 51 and the lower clearance light-emitting portions 52 in a front view. The clearance light-guiding portion 36 guides the light that has entered the incident surfaces 36a from the light sources 34, and emits the light on the vehicle front side toward the upper clearance light-emitting portions 51 and the lower clearance light-emitting portions 52. The clearance light-guiding portion 36 has end surfaces (opposing surfaces) 36b at the end portions on the opposite side to the incident surfaces 36a in the longitudinal direction (see FIG. 3 and the like). The end surfaces 36b are disposed facing incident surfaces 60 of the emblem light-guiding portion 37. The end surfaces 36b are disposed with spacing from the incident surfaces 60.

The emblem light-guiding portion 37 is formed in, for example, an annular shape. The emblem light-guiding portion 37 represents a center portion of the lamp chamber R in the left-right direction, and is disposed so as to overlap an emblem light-emitting portion 53 described later in a front view. The emblem light-guiding portion 37 is disposed with spacing from the clearance light-guiding portion 36 (see FIG. 3 and the like). The light that is guided from the light sources 34 via the clearance light-guiding portion 36 enters the emblem light-guiding portion 37. The emblem light-guiding portion 37 emits light on the vehicle front side toward the emblem light-emitting portion 53 described later.

The clearance lamp unit 31 is disposed in the lamp chamber R on each of the left and right of the front portion of the vehicle. The clearance lamp unit 31 includes upper clearance light-emitting portions 51 and lower clearance light-emitting portions 52. In the present embodiment, as the upper clearance light-emitting portions 51 and the lower clearance light-emitting portions 52, members that transmit light, such as inner lenses, are used. The upper clearance light-emitting portions 51 and the lower clearance light-emitting portions 52 emit light due to the light that has been emitted from the clearance light-guiding portion 36 of the light-guiding body 35.

The upper clearance light-emitting portions 51 are disposed above the irradiation portions 24 and 26 of the headlight unit 20 in a front view, and extend in the left-right direction. The lower clearance light-emitting portions 51 are disposed below the irradiation portions 24 and 26 of the headlight unit 20 in a front view, and extend in the left-right direction. The upper clearance light-emitting portions 51 and the lower clearance light-emitting portions 52 are formed in a shape with a thickness in the vehicle front-rear direction, and are each provided protruding from a base portion 41 of the inner panel 40 toward the vehicle front side.

The left and right upper clearance light-emitting portions 51 each have a first horizontal portion 51a, an inclined portion 51b, and a second horizontal portion 51c. The first horizontal portion 51a extends in the horizontal direction from the end portion on the outer side of the vehicle toward the inner side of the vehicle. The inclined portion 51b extends diagonally downward from the first horizontal portion 51a toward the center of the vehicle in the left-right direction. The second horizontal portion 51c extends in the horizontal direction from the inclined portion 51b toward the inner side of the vehicle. The end portion of the second horizontal portion 51c on the inner side of the vehicle is connected to the emblem light-emitting portion 53 described later.

Furthermore, the left and right lower clearance light-emitting portions 52 each include a first horizontal portion 52a, an inclined portion 52b, and a second horizontal portion 52c. The first horizontal portion 52a extends in the horizontal direction from the end portion of the outer side of the vehicle toward the inner side of the vehicle. The inclined portion 52b extends diagonally upward from the first horizontal portion 52a toward the center of the vehicle in the left-right direction. The second horizontal portion 52c extends in the horizontal direction from the inclined portion 52b toward the inner side of the vehicle. The end portion of the second horizontal portion 52c on the inner side of the vehicle is connected to the emblem light-emitting portion 53 described later.

As a result of providing the inclined portions 51b and 52b, the upper clearance light-emitting portions 51 and the lower clearance light-emitting portions 52 are formed so as to approach each other in the up-down direction from the outer side of the vehicle toward the center of the vehicle in the left-right direction.

The upper clearance light-emitting portions 51 have a rear surface 51r that is disposed facing the clearance light-guiding portion 36. The light emitted from the clearance light-guiding portion 36 enters the rear surface 51r. The upper clearance light-emitting portions 51 emit light from a front surface 51f and an upper surface 51e. The upper clearance light-emitting portions 51 adopts a light-emitting state as a result of emitting light from the front surface 51f and the upper surface 51e, which protrude from the inner panel 40.

Similarly, the lower clearance light-emitting portions 52 have a rear surface 52r that is disposed facing the clearance light-guiding portion 36. The light emitted from the clearance light-guiding portion 36 enters the rear surface 52r. The lower clearance light-emitting portions 52 emit light from a front surface 52f and an upper surface 52e that protrude from the inner panel 40. The lower clearance light-emitting portions 52 adopt a light-emitting state as a result of emitting light from the front surface 52f and the upper surface 52e.

The upper clearance light-emitting portions 51 have upper patterns 51p that are arranged side-by-side in the left-right direction on the upper surface 51e. Furthermore, the lower clearance light-emitting portions 52 have lower patterns 52p that are arranged side-by-side in the left-right direction on the upper surface 52e. Although the lower patterns 52p are shown in FIG. 3, the upper patterns 51p have the same configuration. In the present embodiment, the upper patterns 51p and the lower patterns 52p have a configuration in which, for example, a plurality of patterns consisting of three line-shaped parts extending in the vehicle front-rear direction are arranged side-by-side in the left-right direction with spacing therebetween. As a result of providing the upper patterns 51p and the lower patterns 52p, when the upper clearance light-emitting portions 51 and the lower clearance light-emitting portions 52 emit light, patterns corresponding to the upper patterns 51p and the lower patterns 52p become visible on the upper surfaces 51e and 52e.

The emblem light-emitting unit 32 is disposed in the lamp chamber R, and causes the emblem of the vehicle to emit light. The emblem light-emitting unit 32 includes the emblem light-guiding portion (light-emitting body) 37 described above, an emblem light-emitting portion (inner lens) 53, and a light-blocking pattern 55.

The emblem light-emitting portion 53 is connected to the end portions of the left and right upper clearance light-emitting portions 51 and lower clearance light-emitting portion 52 on the inner side of the vehicle. Therefore, the emblem light-emitting portion 53 is capable of achieving an appearance in which the upper clearance light-emitting portions 51 and the lower clearance light-emitting portions 52 are integrated at the part protruding from the base portion 41 of the inner panel 40. The emblem light-emitting portion 53 emits light at the same timing as the left and right upper clearance light-emitting portions 51 and lower clearance light-emitting portions 52.

The emblem light-emitting portion 53 is disposed at the center of the lamp chamber R in the left-right direction. An inner lens is used as the emblem light-emitting portion 53. The emblem light-emitting portion 53 is held by an emblem holding portion 44. The emblem holding portion 44 is attached to the inner panel 40. The emblem light-emitting portion 53 emits the light from the emblem light-guiding portion 37 to at least the front.

The emblem light-emitting portion 53 has a shape that extends in the vehicle front-rear direction. As shown in FIG. 5, the emblem light-emitting portion 53 includes a plate-shaped portion 53a and a cylindrical portion 53b. The plate-shaped portion 53a is disposed on the end portion on the front of the emblem light-emitting portion 53. The plate-shaped portion 53a has, for example, an oval shape in a front view. The plate-shaped portion 53a has a rear surface 53r and a front surface 53f. The light that has been emitted from the emblem light-guiding portion 37 of the light-guiding body 35 enters the rear surface 53r. The light that has entered from the rear surface 53r is emitted from the front surface 53f.

The cylindrical portion 53b extends toward the vehicle rear side from the plate-shaped portion 53a. The cylindrical portion 53b has an outer peripheral surface (side surface) 53e and an inner peripheral surface 53i. In the cylindrical portion 53b, a portion of the part that is connected to the plate-shaped portion 53a protrudes toward the vehicle front side from the base portion 41 of the inner panel 40. Hereinafter, the part protruding toward the vehicle front side from the base portion 41 is referred to as a projection portion 53g. The light that has been emitted from the emblem light-guiding portion 37 of the light-guiding body 35 enters the inner peripheral surface 53i of the cylindrical portion 53b. The incident light is guided toward the vehicle front side by the cylindrical portion 53b. A portion of the light that enters the cylindrical portion 53b is emitted toward the vehicle front side from an outer edge portion of the front surface 53f. Furthermore, a portion of the light that enters the cylindrical portion 53b is emitted from the projection portion 53g toward the side direction with respect to the vehicle front-rear direction.

The emblem light-emitting portion 53 adopts a light-emitting state as a result of light being emitted from the front surface 53f and the projection portion 53g of the outer peripheral surface 53e. As a result, the emblem light-emitting portion 53 emits light such that a three-dimensional appearance is achieved.

The light-blocking pattern 55 is disposed on the vehicle front side of the emblem light-emitting portion 53. The light-blocking pattern 55 blocks a portion of the light that is emitted from the emblem light-emitting portion 53. As a result of a portion of the light from the emblem light-emitting portion 53 being blocked by the light-blocking pattern 55, it is possible to form a light emission pattern corresponding to the light-blocking pattern 55.

The light-blocking pattern 55 can be formed on a light-transmitting member that is disposed on the vehicle front side of the emblem light-emitting portion 53. In the present embodiment, the outer lens 11 is used as such a light-transmitting member. The light-blocking pattern 55 is formed on a rear surface 11r of the outer lens 11, which faces the emblem light-emitting portion 53.

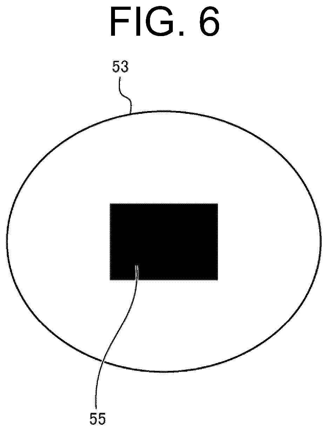

FIG. 6 is a diagram showing an example of the emblem light-emitting portion 53 and the light-blocking pattern 55 when viewed from the front side. As shown in FIG. 6, in a front view, the light-blocking pattern 55 is formed on the outer lens 11 so as to be positioned on the inner side of the emblem light-emitting portion 53. In other words, the light-blocking pattern 55 is formed so as to not extend outside the outline of the emblem light-emitting portion 53 in a front view.

The turn lamp unit 33 is disposed in the lamp chamber R, and further on the outer side of the vehicle than each of the left and right headlight units 20. The turn lamp unit 33 includes light sources 38. As the light sources 38, for example, semiconductor light sources such as LEDs, or laser light sources may be used. The light sources 38 are disposed such that a light-emitting surface 38a faces the vehicle front side. The light sources 38 emit light from the light-emitting surface 38a toward the vehicle front side. For example, three light sources 38 are provided on each of the left and right sides of the lamp chamber R. On each of the left and right sides, the three light sources 38 are disposed side-by-side from the upper to lower side of the substrate 39.

The turn lamp unit 33 includes turn light-emitting portions 54 on the left and right. As the turn light-emitting portions 54, for example, members that transmits light, such as inner lenses, are used. The turn light-emitting portions 54 are disposed extending in the up-down direction from a position corresponding to the end portions of the upper clearance light-emitting portions 51 on the outer side of the vehicle to a position corresponding to the end portions of the lower clearance light-emitting portions 52 on the outer side of the vehicle. Note that the light-blocking portions 45 are each provided between the turn light-emitting portions 54 and the end portions of the upper clearance light-emitting portions 51 on the outer side of the vehicle, and between the turn light-emitting portions 54 and the end portions of the lower clearance light-emitting portions 52 on the outer side of the vehicle. The turn light-emitting portions 54 emit light due to the light emitted from the light sources 38. The turn light-emitting portions 54 are provided protruding from the inner panel 40 toward the vehicle front side. The turn light-emitting portions 54 are provided in a state where a side surface 54e and a front surface 54f are visible from the outside.

The turn light-emitting portions 54 have the rear surface 54r disposed facing the light-emitting surface 38a of the light sources 38. The light emitted from the light-emitting surfaces 38a enters the rear surface 54r. The light that has entered from the rear surface 54r is emitted from the front surface 54f. The turn light-emitting portion 54 adopts a light-emitting state as a result of emitting light from the front surface 54f.

The inner panel 40 is disposed spanning both sides of the lamp chamber R in the left-right direction. The inner panel 40 includes the base portion 41, upper frame portions 42, and lower frame portions 43. The base portion 41 is disposed perpendicular to, or intersecting, the vehicle front-rear direction. In the lamp chamber R, the base portion 41 is disposed so as to cover the periphery of the irradiation portions 24 of the low beam unit 21, the irradiation portions 26 of the high beam unit 22, the upper clearance light-emitting portions 51, the lower clearance light-emitting portions 52, the emblem light-emitting portion 53, and the turn light-emitting portions 54.

The base portion 41 has opening portions 41a, 41b, 41c, 41d, and 41e. The opening portions 41a are provided in positions corresponding to the irradiation portions 24 of the low beam unit 21 and the irradiation portions 26 of the high beam unit 22. The opening portions 41b are provided in positions corresponding to the upper clearance light-emitting portions 51. The upper clearance light-emitting portions 51 pass through the opening portions 41b in the vehicle front-rear direction, and are provided so as to protrude from the opening portion 41b toward the vehicle front side. The opening portions 41c are provided in positions corresponding to the lower clearance light-emitting portions 52. The lower clearance light-emitting portion 52 pass through the opening portion 41c in the vehicle front-rear direction, and are provided so as to protrude from the opening portions 41c toward the vehicle front side. The opening portion 41d is provided in a position corresponding to the emblem light-emitting portion 53. The opening portions 41e are provided in positions corresponding to the turn light-emitting portions 54.

The upper frame portions 42 are provided so as to protrude from a lower edge portion of the opening portions 41b of the base portion 41 toward the vehicle front side. The upper frame portions 42 are provided spanning the entire opening portion 41b in the left-right direction. The upper frame portions 42 are disposed along the lower surface 51d of the upper clearance light-emitting portions 51. The upper frame portions 42 are provided along each of the first horizontal portion 51a, the inclined portion 51b, and the second horizontal portion 51c of the upper clearance light-emitting portions 51. In other words, the upper clearance light-emitting portions 51 have the entire lower surface 51d covered by the upper frame portion 42 in the left-right direction. The upper clearance light-emitting portions 51 are provided in a state where the upper surface 51e and the front surface 51f are visible from the outside. As shown in FIG. 4, the upper frame portions 42 have an end surface 42f on the front that is flush with the front surface 51f of the upper clearance light-emitting portions 51.

Furthermore, the lower frame portions 43 are provided so as to protrude from a lower edge portion of the opening portions 41c of the base portion 41 toward the vehicle front side. The lower frame portions 43 are provided spanning the entire opening portion 41c in the left-right direction. The lower frame portions 43 are disposed along the lower surface 52d of the lower clearance light-emitting portions 52. The lower frame portions 43 are provided along each of the first horizontal portion 52a, the inclined portion 52b, and the second horizontal portion 52c of the lower clearance light-emitting portions 52. In other words, the lower clearance light-emitting portions 52 have the entire lower surface 52d covered by the lower frame portion 43 in the left-right direction. The lower clearance light-emitting portions 52 are provided in a state where the upper surface 52e and the front surface 52f are visible from the outside. As shown in FIG. 4, the lower frame portions 43 has an end surface 43f on the front that is flush with the front surface 52f of the lower clearance light-emitting portions 52.

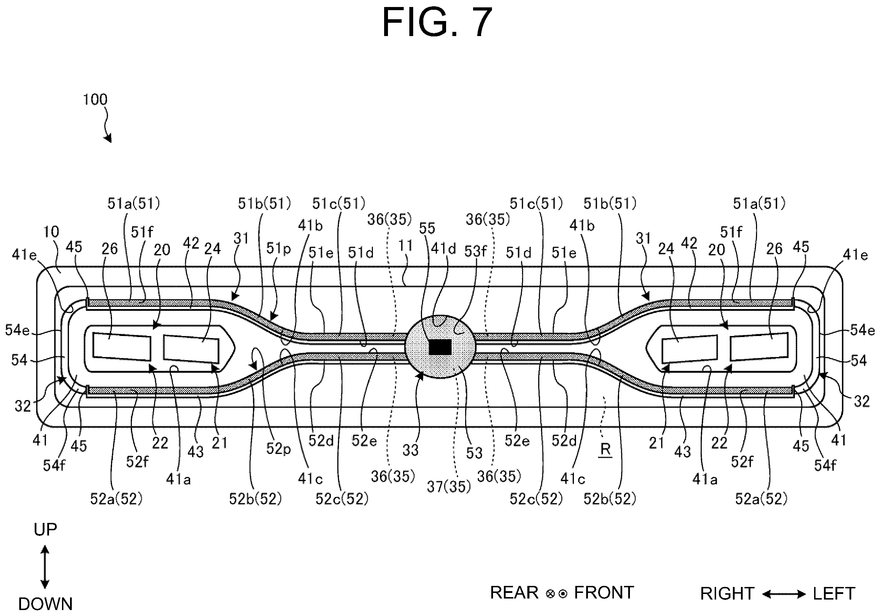

Next, an operation of the vehicle lighting fixture 100 configured as described above will be described. FIGS. 7 to 9 are diagrams showing an example of a state where the vehicle lighting fixture 100 has been illuminated. FIGS. 7 to 9 show a state where the vehicle lighting fixture 100 has been viewed from the front side. In a case where a signal to illuminate each unit of the vehicle lighting fixture 100 is supplied from the vehicle side, the vehicle lighting fixture 100 acquires the signal from the vehicle. For example, in a case where a signal to illuminate the clearance lamp unit 31 is acquired, the vehicle lighting fixture 100 performs a light emission control of the light sources 34 based on the signal. As a result of the light emission control, light is emitted from the light sources 34. The light emitted from the light sources 34 is guided by the clearance light-guiding portion 36 of the light-guiding body 35, and a portion of the light is emitted toward the upper clearance light-emitting portions 51 and the lower clearance light-emitting portion 52. As shown in FIG. 7, as a result of the light entering the upper clearance light-emitting portions 51, the upper surface 51e and the front surface 51f of the upper clearance light-emitting portions 51 emit light. As a result of the light entering the lower clearance light-emitting portions 52, the upper surface 52e and the front surface 52f of the lower clearance light-emitting portions 52 emit light. At this time, a pattern corresponding to the upper patterns 51p can be visually recognized on the upper surface 51e of the upper clearance light-emitting portions 51. Furthermore, a pattern corresponding to the lower patterns 52p can be visually recognized on the upper surface 52e of the lower clearance light-emitting portions 52. In this way, a light-emitting state having high designability can be achieved.

In addition, a portion of the light that is guided by the clearance light-guiding portion 36 reaches the emblem light-guiding portion 37. The light is guided by the emblem light-guiding portion 37 and is emitted to the emblem light-emitting portion 53. As shown in FIG. 7, the emblem light-emitting portion 53 emits light as a result of the light that enters the emblem light-emitting portion 53. In this way, the emblem light-emitting portion 53 emits light at the same timing as the upper clearance light-emitting portions 51 and lower clearance light-emitting portions 52.

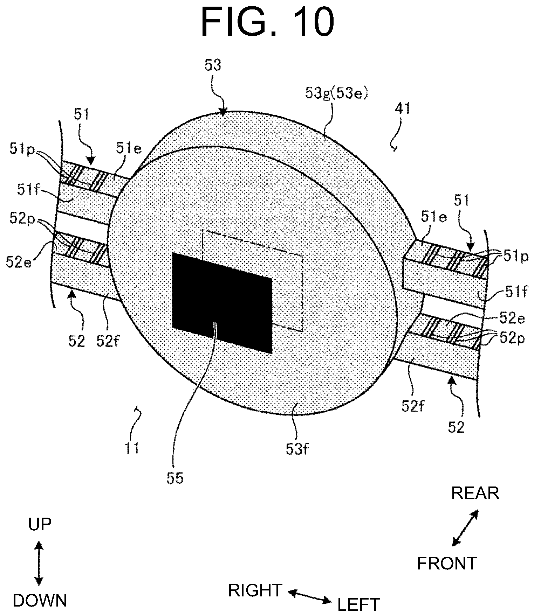

FIG. 10 is a perspective view showing an example of a light-emitting state of the emblem light-emitting portion 53. As shown in FIG. 10, the emblem light-emitting portion 53 emits light. As a result of the emblem light-emitting portion 53 emitting light, a light emission pattern is formed in a state where a portion of the light is blocked by the light-blocking pattern 55 formed on the outer lens 11. In the present embodiment, the light-blocking pattern 55 is disposed at a position away from the front surface 53f of the emblem light-emitting portion 53 toward the vehicle front side. As a result, compared to a case where the light-blocking pattern 55 is formed on the front surface 53f of the emblem light-emitting portion 53 (indicated by the dash-dotted line in the drawing) a light-emitting state is obtained in which the pattern appears to be floating in the vehicle front direction. As a result, a three-dimensional appearance is achieved in the light-emitting state.

Also, the emblem light-emitting portion 53 emits light from a part protruding toward the vehicle front side from the base portion 41 of the inner panel 40, that is, the front surface 53f and the projection portion 53g of the outer peripheral surface 53e. That is, the emblem light-emitting portion 53 emits light with the front surface 53f and the outer peripheral surface 53e (projection portion g) such that a three-dimensional appearance is achieved. In this way, a three-dimensional appearance is achieved with respect to the appearance of the light-blocking pattern 55, and because the emblem light-emitting portion 53 itself emits light with a three-dimensional appearance, it is possible to achieve a clearly three-dimensional appearance.

In addition, the emblem light-emitting portion 53 emits light with the upper clearance light-emitting portions 51 and the lower clearance light-emitting portions 52 to achieve a three-dimensional appearance. Therefore, it is possible to achieve an even more clearly three-dimensional appearance, and to achieve a light-emitting state with high designability.

Furthermore, for example, in a case where a signal is acquired that causes the low beam unit 21 and the high beam unit 22 to be illuminated, the vehicle lighting fixture 100 performs a light emission control of the light sources 23 of the low beam unit 21 and the light sources 25 of the high beam unit 22 based on the signal. The light emitted from the light sources 23 and 25 is subjected to a light distribution control by the irradiation portions 24 and 26, and is then irradiated toward the vehicle front side. As a result, a low beam pattern and a high beam pattern are formed on the vehicle front side.

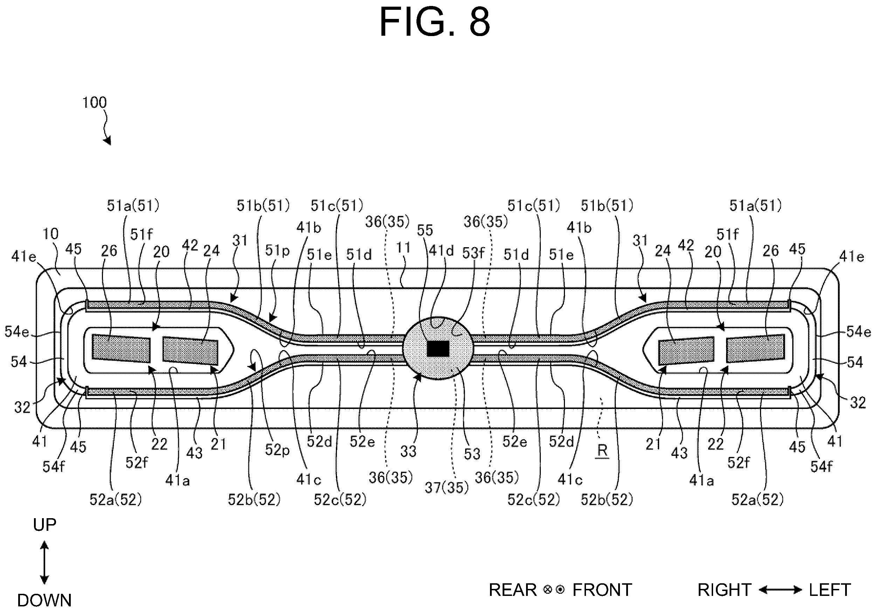

In the vehicle lighting fixture 100, when the low beam unit 21 and the high beam unit 22 are illuminated, a control is sometimes performed such that the clearance lamp unit 31 is also illuminated. In such a case, as shown in FIG. 8, at the same time light is irradiated toward the vehicle front side from the irradiation portions 24 and 26, the upper clearance light-emitting portions 51, the lower clearance light-emitting portions 52, and the emblem light-emitting portion 53 emit light. In the present embodiment, the upper frame portions 42 are provided along the lower surface 51d of the upper clearance light-emitting portions 51, and the lower frame portions 43 are provided along the lower surface 52d of the lower clearance light-emitting portions 52. For this reason, the light from the irradiation portions 24 and 26 and the light emitted by the upper clearance light-emitting portions 51 and the lower clearance light-emitting portion 52 are clearly distinguished when visually observed.

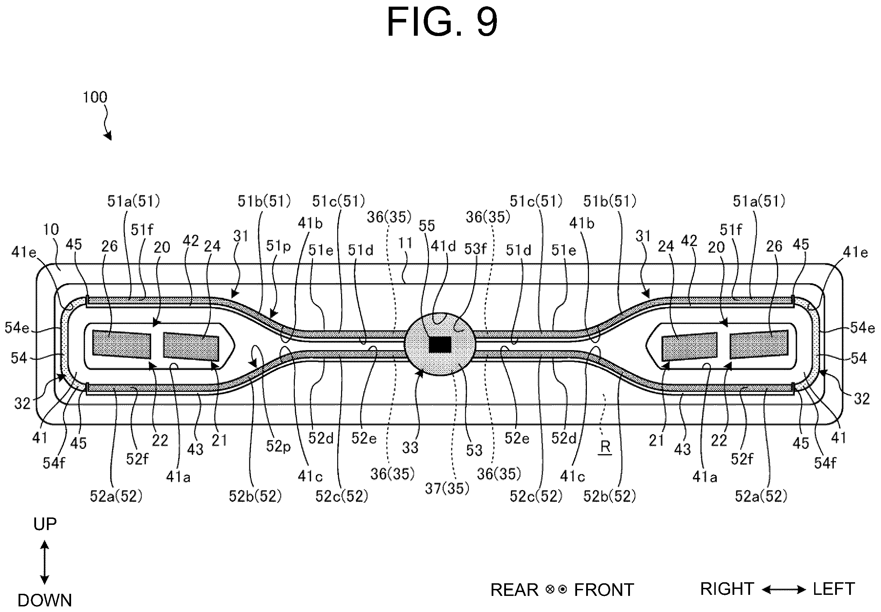

Furthermore, for example, in a case where a signal to illuminate the turn lamp unit 33 is acquired, the vehicle lighting fixture 100 performs a light emission control of the light sources 38 based on the signal. As a result of the light emission control, light is emitted from the light sources 38. The light emitted from the light sources 38 is emitted toward the turn light-emitting portions 54. As shown in FIG. 9, the front surface 54f of the turn light-emitting portions 54 emits light due to the light entering the turn light-emitting portions 54. In the present embodiment, the turn light-emitting portions 54 are disposed so as to extend in the up-down direction from a position corresponding to the end portions of the upper clearance light-emitting portions 51 on the outer side of the vehicle to a position corresponding to the end portions of the lower clearance light-emitting portions 52 on the outer side of the vehicle. As a result, for example, in a case where the turn light-emitting portions 54 emits light in a state where the upper clearance light-emitting portions 51 and the lower clearance light-emitting portions 52 are emitting light, the front surface 54f of the turn light-emitting portions 54 emits light so as to connect the front surface 51f of the upper clearance light-emitting portions 51 and the front surface 52f of the lower clearance light-emitting portions 52. In this way, a light-emitting state having high designability can be achieved. In addition, the turn light-emitting portions 54 are provided in a state where the side surface 54e is visible from the outside, and the front surface 54f is disposed so as to protrude from the inner panel 40 toward the vehicle front side of the lamp chamber R. As a result, in the light-emitting state, the region protruding toward the vehicle front side from the inner panel 40 appears to be emitting light. In this way, a high designability can be achieved in the light-emitting state.

As described above, the vehicle lighting fixture 100 according to the present embodiment includes: the emblem light-guiding portion 37; the emblem light-emitting portion 53 that emits the light from the emblem light-guiding portion 37 at least on the front side in the vehicle front-rear direction; and the outer lens 11, which is disposed at a position away from the emblem light-emitting portion 53 on the front side, and on which the light-blocking pattern 55 is formed that blocks a portion of the light emitted from the emblem light-emitting portion 53.

According to such a configuration, the light-blocking pattern 55 is disposed at a position away from the front surface 53f of the emblem light-emitting portion 53 toward the vehicle front side. For this reason, it is possible to achieve a light-emitting state in which the light-blocking pattern 55 appears to be floating toward the vehicle front side with respect to the emblem light-emitting portion 53. As a result, it is possible to achieve a three-dimensional appearance in the light-emitting state.

In the vehicle lighting fixture 100 according to the present embodiment, the light-blocking pattern 55 is formed on the rear surface 11r of the outer lens 11, which faces the emblem light-emitting portion 53. According to such a configuration, the light-blocking pattern 55 can be easily formed.

In the vehicle lighting fixture 100 according to the present embodiment, the emblem light-emitting portion 53 has a shape that extends in the vehicle front-rear direction, and emits light from the front surface 53f, which is disposed on the end portion on the front side in the vehicle front-rear direction, and the projection portion 53g which, of the outer peripheral surface 53e extending toward the back side from the front surface 53f, is connected to the front surface 53f. According to such a configuration, the emblem light-emitting portion 53 emits light with the front surface 53f and the outer peripheral surface 53e (projection portion g) such that a three-dimensional appearance is achieved. In this way, a three-dimensional appearance is achieved with respect to the appearance of the light-blocking pattern 55, and because the emblem light-emitting portion 53 itself emits light with a three-dimensional appearance, it is possible to achieve a clearly three-dimensional appearance.

The vehicle lighting fixture 100 according to the present embodiment is further provided with the inner panel 40, which covers a portion of the emblem light-guiding portion 37 and the emblem light-emitting portion 53, and the emblem light-emitting portion 53 has the projection portion 53g, being the portion of the outer peripheral surface 53e that emits light, provided protruding from the base portion 41 of the inner panel 40 toward the front side. According to such a configuration, it is possible to achieve an appearance in which the emblem light-emitting portion 53 appears to be emitting light while floating above the base portion 41. As a result, a three-dimensional appearance can be even more clearly achieved.

In the vehicle lighting fixture 100 according to the present embodiment, the outer lens 11 has the light-blocking pattern 55 disposed on the inner side of the emblem light-emitting portion 53 in a front view. As a result, the entire light-blocking pattern 55 can be irradiated with the light from the emblem light-emitting portion 53.

The vehicle lighting fixture 100 according to the present embodiment is further provided with the housing 10 that accommodates the emblem light-guiding portion 37 and the emblem light-emitting portion 53, and the outer lens 11 forms the lamp chamber R with the housing 10. According to such a configuration, because the light-blocking pattern 55 can be formed on the outer lens 11, the light-blocking pattern 55 can be easily arranged.

The vehicle lighting fixture 100 according to the present embodiment further includes the light sources 38, and the clearance light-guiding portion 36 that has the end surfaces 36b that face the emblem light-guiding portion 37, and which guides the light from the light sources 38 and emits the light from the end surfaces 36b to the emblem light-guiding portion 37, while also emitting the light from the light sources 38 from a side surface toward the upper clearance light-emitting portions 51 and the lower clearance light-emitting portions 52, which are other optical members that are different from the emblem light-guiding portion 37, before the light is guided to the end surfaces 36b, wherein the emblem light-guiding portion 37 emits light due to the light emitted from the clearance light-guiding portion 36. According to such a configuration, as a result of the emblem light-emitting portion 53 emitting light with the upper clearance light-emitting portions 51 and the lower clearance light-emitting portions 52, it is possible to achieve a light-emitting state having a high designability.

The technical scope of the present invention is not limited to the embodiment described above, and can be modified as appropriate without departing from the spirit of the present invention. For example, although the embodiment above described a case where the emblem light-guiding portion 37 is used as a light-emitting body as an example, the present invention is not limited to such a configuration. As the light-emitting body, a light source may be used instead of the emblem light-guiding portion 37. Furthermore, the shape of the light-emitting body is not limited to an annular shape, and may be another shape such as a plate shape.

In the embodiment described above, although a configuration in which the vehicle lighting fixture 100 is provided on the front portion of the vehicle has been described as an example, the present invention is not limited to this. A configuration is also possible in which the vehicle lighting fixture is provided on the rear portion of the vehicle. **In** this case, the front side becomes the vehicle rear side, and the back side becomes the vehicle front side.

### <Second Embodiment>

Hereinafter, a second embodiment of a lighting fixture unit and a vehicle lighting fixture according to the present invention will be described based on the drawings. Note that the present invention is not limited to the present embodiment. Furthermore, the components in the following embodiment include those that can be easily replaced by those skilled in the art, and components that are substantially the same.

In the following description, each of the front-rear, up-down, and left-right directions are directions in a vehicle-mounted state where the vehicle lighting fixture has been mounted on a vehicle, and represent directions in a case where the traveling direction of the vehicle is viewed from the driver's seat. Note that, in the present embodiment, the up-down direction is parallel to the vertical direction, and the vehicle front-rear direction and the left-right direction are parallel to the horizontal direction. Furthermore, a center side of the vehicle in the left-right direction is referred to as the inner side of the vehicle, and a side portion side of the vehicle in the left-right direction is referred to as the outer side of the vehicle.

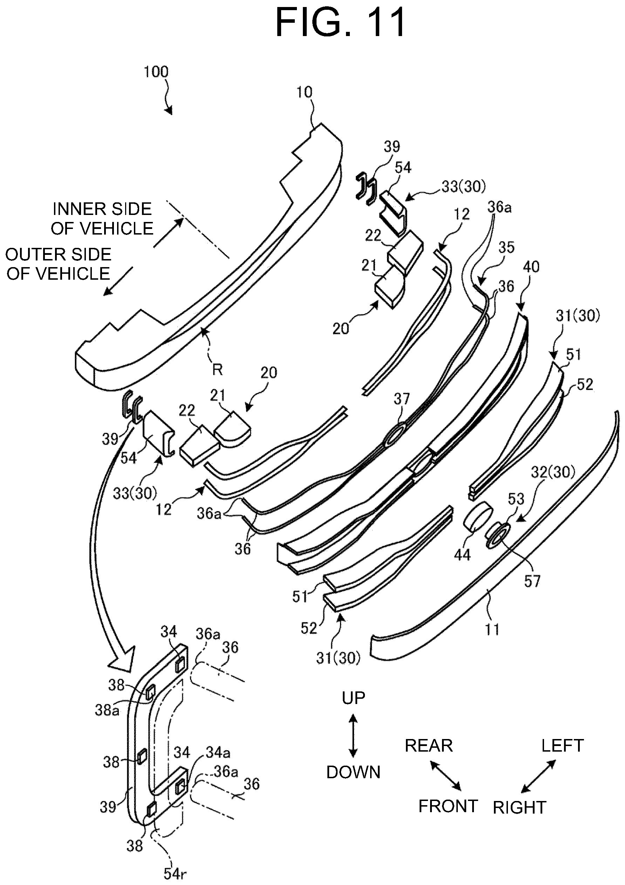

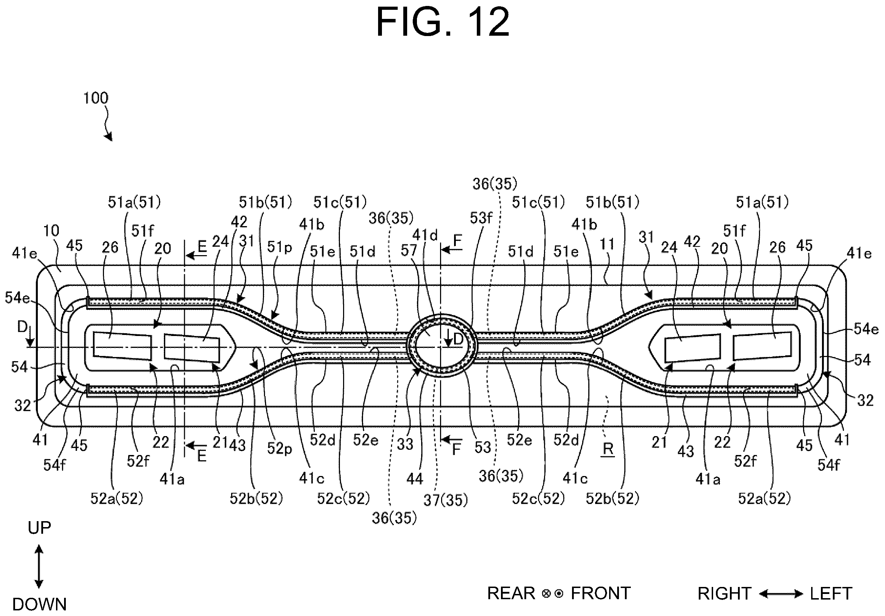

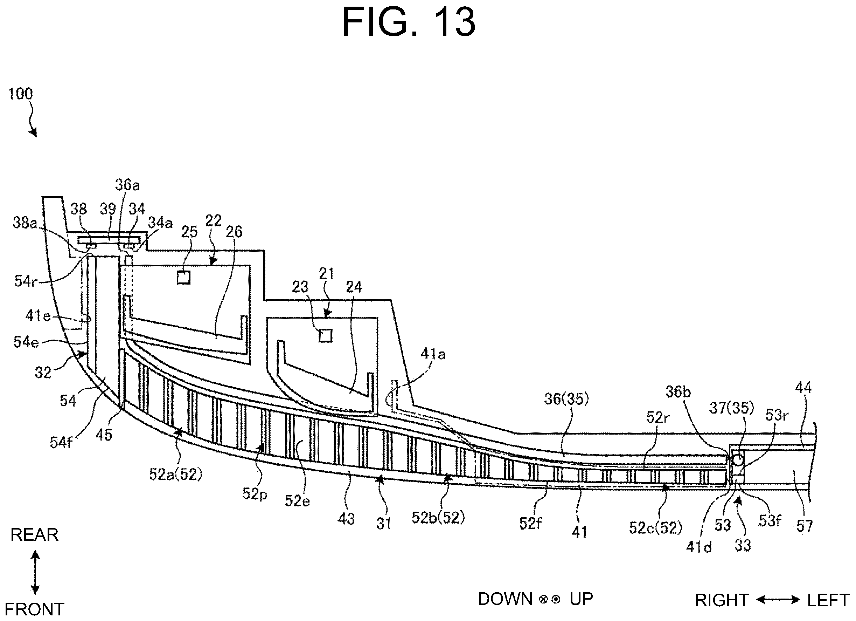

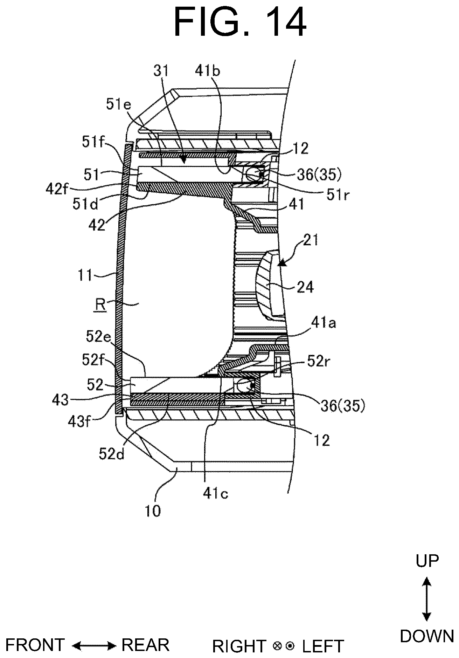

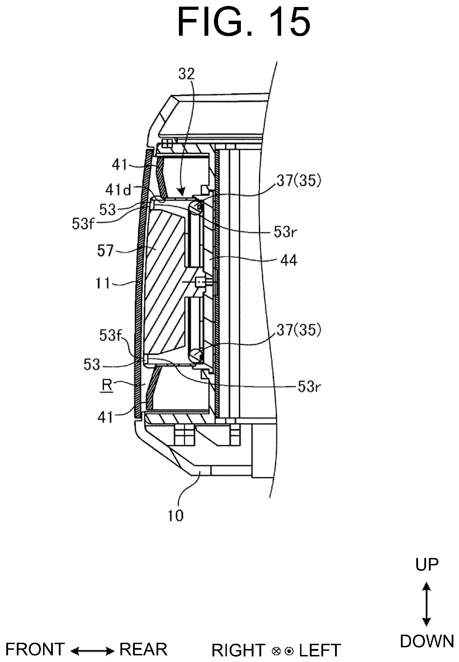

FIG. 11 is an exploded perspective view showing an example of a vehicle lighting fixture 100 according to the second embodiment. FIG. 12 is a front view showing an example of the vehicle lighting fixture 100 according to the second embodiment. FIG. 13 is a diagram showing a configuration along a D-D cross section in FIG. 12. FIG. 14 is a diagram showing a configuration along an E-E cross section in FIG. 12. FIG. 15 is a diagram showing a configuration along an F-F cross section in FIG. 12. As shown in FIGS. 11 to 15, the vehicle lighting fixture 100 includes a housing 10, headlight units 20, lighting fixture units 30, and an inner panel 40. The vehicle lighting fixture 100 has a symmetrical configuration in the left-right direction.

The housing 10 is provided spanning both sides of the front portion of the vehicle in the left-right direction. The housing 10 forms a single lamp chamber R with the outer lens 11. The lamp chamber R includes a center portion of the front portion of the vehicle in the left-right direction, and is formed spanning both sides in the left-right direction. The lamp chamber R has a configuration that extends in a rectangular shape in the left-right direction in a front view.

The headlight units 20 are accommodated in the lamp chamber R. The headlight units 20 are disposed on each of the left and right on the front portion of the vehicle. The headlight units 20 irradiate a headlight pattern toward the vehicle front side. The headlight units 20 include a low beam unit 21 and a high beam unit 22.

The low beam unit 21 irradiates a low beam pattern as a headlight pattern toward the vehicle front side. The low beam unit 21 includes light sources 23 and irradiation portions 24. As the light sources 23, for example, semiconductor light sources such as LEDs, or laser light sources may be used. The irradiation portions 24 control the light distribution of the light emitted from the light sources 23, and irradiate the light toward the vehicle front side as a low beam pattern. As the irradiation portions 24, for example, reflectors or projection lenses may be used.

The high beam unit 22 irradiates a high beam pattern as a headlight pattern toward the vehicle front side. The high beam unit 22 is disposed, for example, further on the outer side of vehicle than the low beam unit 21. The high beam unit 22 includes light sources 25 and irradiation portions 26. As the light sources 25, for example, semiconductor light sources such as LEDs, or laser light sources may be used. The irradiation portions 26 control the light distribution of the light emitted from the light sources 25, and irradiate the light toward the vehicle front side as a high beam pattern. As the irradiation portions 26, for example, reflectors or projection lenses may be used.

The lighting fixture unit 30 includes a clearance lamp unit 31, an emblem light-emitting unit 32, and a turn lamp unit 33.

The clearance lamp unit 31 and the emblem light-emitting unit 32 are provided with shared light sources 34 and a light-guiding body 35. As the light sources 34, for example, semiconductor light sources such as LEDs, or laser light sources may be used. The light sources 34 are disposed such that a light-emitting surface 34a faces the vehicle front side. The light sources 34 emit light from the light-emitting surface 34a toward the vehicle front side. For example, two light sources 34 are provided on each of the left and right sides of the lamp chamber R. On each of the left and right sides, the two light sources 34 are disposed side-by-side on the upper and lower sides of a substrate 39. Note that the substrate 39 is shared between the clearance lamp unit 31, the emblem light-emitting unit 32, and the turn lamp unit 33.

The light-guiding body 35 guides the light emitted from the light sources 34. The light-guiding body 35 is provided in a state where, for example, the part other than the vehicle front side part is covered by a light-guiding body cover 12. The light-guiding body 35 includes a clearance light-guiding portion (rod-shaped light-guiding body) 36, and an emblem light-guiding portion (annular light-guiding body) 37.

The clearance light-guiding portion 36 includes incident surfaces 36a that face the light sources 34. The clearance light-guiding portion 36 extends toward the vehicle front side from the incident surfaces 36a, and is curved toward the inner side of the vehicle along upper clearance light-emitting portions 51 and lower clearance light-emitting portions 52 of the clearance lamp unit 31 described later. The clearance light-guiding portion 36 is disposed so as to overlap the upper clearance light-emitting portions 51 and the lower clearance light-emitting portions 52 in a front view. The clearance light-guiding portion 36 guides the light that has entered the incident surfaces 36a from the light sources 34, and emits the light on the vehicle front side toward the upper clearance light-emitting portions 51 and the lower clearance light-emitting portions 52. The clearance light-guiding portion 36 has end surfaces 36b on the end portions on the opposite side to the incident surfaces 36a in the longitudinal direction (see FIG. 13 and the like). The end surfaces 36b are disposed facing incident surfaces 60 of the emblem light-guiding portion 37. The end surfaces 36b are disposed with spacing from the incident surfaces 60.

The emblem light-guiding portion 37 is formed in, for example, an annular shape. The emblem light-guiding portion 37 represents a center portion of the lamp chamber R in the left-right direction, and is disposed so as to overlap an emblem light-emitting portion 53 described later in a front view. The emblem light-guiding portion 37 is disposed leaving spacing with the clearance light-guiding portion 36 (see FIG. 13 and the like). The light that is guided from the light sources 34 via the clearance light-guiding portion 36 enters the emblem light-guiding portion 37. The emblem light-guiding portion 37 emits light on the vehicle front side toward the emblem light-emitting portion 53 described later. The detailed configuration of the emblem light-guiding portion 37 will be described later.

The clearance lamp unit 31 is disposed in the lamp chamber R on each of the left and right of the front portion of the vehicle. The clearance lamp unit 31 includes upper clearance light-emitting portions 51 and lower clearance light-emitting portions 52. In the present embodiment, as the upper clearance light-emitting portions 51 and the lower clearance light-emitting portions 52, light-transmitting member that transmit light, such as inner lenses, are used. The upper clearance light-emitting portions 51 and the lower clearance light-emitting portions 52 emit light due to the light that has been emitted from the clearance light-guiding portion 36 of the light-guiding body 35.

The upper clearance light-emitting portions 51 are disposed above the irradiation portions 24 and 26 of the headlight unit 20 in a front view, and extend in the left-right direction. The lower clearance light-emitting portions 51 are disposed below the irradiation portions 24 and 26 of the headlight unit 20 in a front view, and extend in the left-right direction. The upper clearance light-emitting portions 51 and the lower clearance light-emitting portions 52 are formed in a shape with a thickness in the vehicle front-rear direction, and are each provided protruding from a base portion 41 of the inner panel 40 toward the vehicle front side.

The left and right upper clearance light-emitting portions 51 each have a first horizontal portion 51a, an inclined portion 51b, and a second horizontal portion 51c. The first horizontal portion 51a extends in the horizontal direction from the end portion on the outer side of the vehicle toward the inner side of the vehicle. The inclined portion 51b extends diagonally downward from the first horizontal portion 51a toward the center of the vehicle in the left-right direction. The second horizontal portion 51c extends in the horizontal direction from the inclined portion 51b toward the inner side of the vehicle. The end portion of the second horizontal portion 51c on the inner side of the vehicle is connected to the emblem light-emitting portion 53 described later.

Furthermore, the left and right lower clearance light-emitting portions 52 each include a first horizontal portion 52a, an inclined portion 52b, and a second horizontal portion 52c. The first horizontal portion 52a extends in the horizontal direction from the end portion of the outer side of the vehicle toward the inner side of the vehicle. The inclined portion 52b extends diagonally upward from the first horizontal portion 52a toward the center of the vehicle in the left-right direction. The second horizontal portion 52c extends in the horizontal direction from the inclined portion 52b toward the inner side of the vehicle. The end portion of the second horizontal portion 52c on the inner side of the vehicle is connected to the emblem light-emitting portion 53 described later.

As a result of providing the inclined portions 51b and 52b, the upper clearance light-emitting portions 51 and the lower clearance light-emitting portions 52 are formed so as to approach each other in the up-down direction from the outer side of the vehicle toward the center of the vehicle in the left-right direction.

The upper clearance light-emitting portions 51 have a rear surface 51r that is disposed facing the clearance light-guiding portion 36. The light emitted from the clearance light-guiding portion 36 enters the rear surface 51r. The upper clearance light-emitting portions 51 emit light from a front surface 51f and an upper surface 51e. The upper clearance light-emitting portions 51 adopts a light-emitting state as a result of emitting light from the front surface 51f and the upper surface 51e, which protrude from the inner panel 40.

Similarly, the lower clearance light-emitting portions 52 have a rear surface 52r that is disposed facing the clearance light-guiding portion 36. The light emitted from the clearance light-guiding portion 36 enters the rear surface 52r. The lower clearance light-emitting portions 52 emit light from a front surface 52f and an upper surface 52e that protrude from the inner panel 40. The lower clearance light-emitting portions 52 adopt a light-emitting state as a result of emitting light from the front surface 52f and the upper surface 52e.

The upper clearance light-emitting portions 51 have upper patterns 51p that are arranged side-by-side in the left-right direction on the upper surface 51e. Furthermore, the lower clearance light-emitting portions 52 have lower patterns 52p that are arranged side-by-side in the left-right direction on the upper surface 52e. Although the lower patterns 52p are shown in FIG. 13, the upper patterns 51p have the same configuration. In the present embodiment, the upper patterns 51p and the lower patterns 52p have a configuration in which, for example, a plurality of patterns consisting of three line-shaped parts extending in the vehicle front-rear direction are arranged side-by-side in the left-right direction with spacing therebetween. As a result of providing the upper patterns 51p and the lower patterns 52p, when the upper clearance light-emitting portions 51 and the lower clearance light-emitting portions 52 emit light, patterns corresponding to the upper patterns 51p and the lower patterns 52p become visible on the upper surfaces 51e and 52e.

The emblem light-emitting unit 32 is disposed in the lamp chamber R, and causes the emblem of the vehicle to emit light. The emblem light-emitting unit 32 includes the emblem light-guiding portion 37 described above, an emblem light-emitting portion (inner lens) 53, an emblem holding portion (holding portion) 44, and an emblem (light-blocking portion) 57.

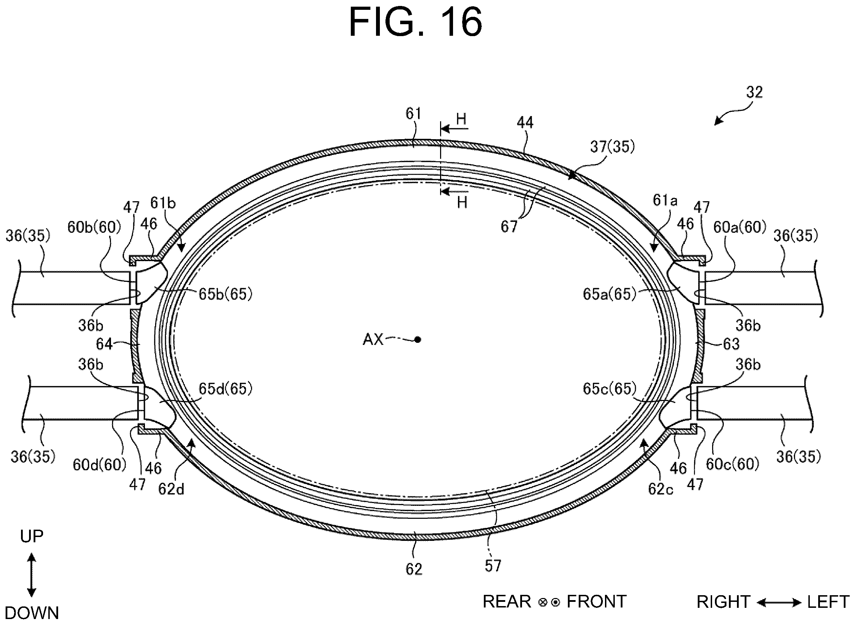

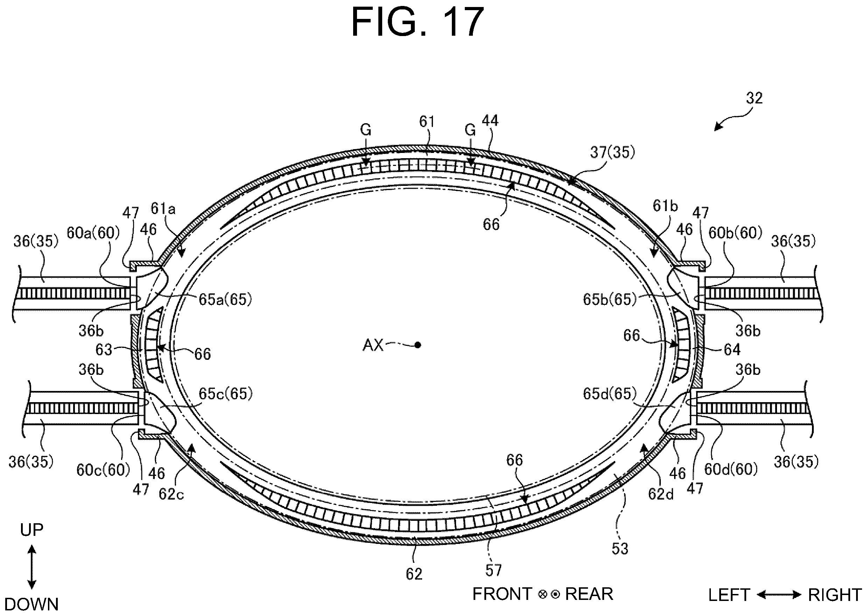

FIGS. 16 and 17 are diagrams showing an example of the emblem light-guiding portion 37. FIG. 16 shows the configuration viewed from the vehicle front side, and FIG. 17 shows the configuration viewed from the vehicle rear side. As shown in FIGS. 16 and 17, the emblem light-guiding portion 37 is formed in an annular shape using a material that is capable of transmitting light. In the present embodiment, for example, the emblem light-guiding portion 37 has an oval shape, but it is not limited to such a configuration and may be formed in other types of annular shapes, such as a circular shape or a polygonal shape.

The emblem light-guiding portion 37 has incident surfaces 60. The emblem light-guiding portion 37 guides the incident light from the incident surfaces 60, and emits the light toward the vehicle front side (front side) in the vehicle front-rear direction. A total of four incident surfaces 60 are provided, at single locations at positions on each of the left and right sides of the emblem light-guiding portion 37 and offset above and below the central axis AX. The incident surfaces 60 are disposed on an outer peripheral portion of the emblem light-guiding portion 37, and are provided facing the outer side in the radial direction in the left-right direction.

Hereinafter, when the incident surfaces 60 are distinguished, the incident surface 60 disposed at the upper left of the vehicle (the upper right when viewed from the front side) is referred to as the incident surface 60a, the incident surface 60 disposed at the upper right of the vehicle (the upper left when viewed from the front side) is referred to as the incident surface 60b, the incident surface 60 disposed at the lower left of the vehicle (the lower right when viewed from the front side) is referred to as the incident surface 60c, and the incident surface 60 disposed at the lower right of the vehicle (the lower left when viewed from the front side) is referred to as the incident surface 60d. The incident surfaces 60a and 60c disposed on the left side of the vehicle are formed on the outer side in the radial direction in the left-right direction, that is, formed facing the left side. The incident surfaces 60b and 60d disposed on the right side of the vehicle are formed on the outer side in the radial direction in the left-right direction, that is, formed facing the right side.

The incident surfaces 60 are disposed facing the end surfaces 36b of the clearance light-guiding portion 36 described above with spacing therebetween. The light emitted from the end surfaces 36b enter the incident surfaces 60. As a result of the incident surfaces 60 being disposed with spacing from the end surfaces 36b, a configuration is obtained in which the emblem light-guiding portion 37 is physically separated from the clearance light-guiding portion 36.

The emblem light-guiding portion 37 has an upper part 61, a lower part 62, a left part 63, and a right part 64. The upper part 61 is positioned between the incident surfaces 60 (incident surfaces 60a and 60b) on each of the left and right sides on the upper side. The lower part 62 is positioned between the incident surfaces 60 (incident surfaces 60c and 60d) on each of the left and right sides on the lower side. The left part 63 is positioned between the incident surfaces 60 (incident surfaces 60a and 60c) on the upper and lower sides on the left side. The right part 64 is positioned between the incident surfaces 60 (incident surfaces 60b and 60d) on the upper and lower sides on the right side.

The emblem light-guiding portion 37 includes a guide portion 65. The guide portion 65 guides the light that enters from the incident surfaces 60. The guide portion 65 includes upper guide portions 65a and 65b, and lower guide portions 65c and 65d. The upper guide portions 65a and 65b guide the light that enters from the incident surfaces 60a and 60b on the upper side of the central axis AX toward the upper part 61, which is on the upper side. The lower guide portions 65c and 65d guide the light that enters from the incident surfaces 60c and 60d on the lower side of the central axis AX toward the lower part 62, which is on the lower side.

The emblem light-guiding portion 37 includes prisms 66 that internally reflect light traveling inside toward the front side. The prisms 66 are provided along the circumferential direction on the surface of the emblem light-guiding portion 37 on the rear (back side) so as to leave spaces open in parts where the incident surfaces 60 are provided (see FIG. 17 and the like).

The prisms 66 are formed in a recessed state from the rear (back side) of the emblem light-guiding portion 37 toward the front (front side). The prisms 66 are consecutively provided in the circumferential direction in each part of the emblem light-guiding portion 37, namely the upper part 61, the lower part 62, the left part 63, and the right part 64. The depth at which the prisms 66 are provided in the left part 63 and the right part 64 is deeper than that at which the prisms 66 are provided in the upper part 61 and the lower part 62. As a result, a configuration is obtained in which internal reflection of light occurs more easily in the prisms 66 in the left part 63 and the right part 64 than in the upper part 61 and the lower part 62.

The prisms 66 are provided in a part of the surface of the emblem light-guiding portion 37 on the back side that is closer to the outer peripheral side. The light that travels inside the emblem light-guiding portion 37 more easily reaches the surface of the emblem light-guiding portion 37 on the outer peripheral side than the surface on the inner peripheral side. Consequently, as a result of the prisms 66 being disposed in a part of the surface of the back side that is closer to the outer peripheral side, the light traveling inside the emblem light-guiding portion 37 is more easily emitted toward the vehicle front side.

The prisms 66 are provided so as to leave regions open for connecting parts 61a and 61b of the upper part 61 that are connected to the upper guide portions 65a and 65b, and connecting parts 62c and 62d of the lower part 62 that are connected to the lower guide portions 65c and 65d. The light that has entered from the incident surfaces 60 and guided by the guide portion 65 passes through the connecting parts 61a, 61b, 62c, and 62d. As a result of not providing the prisms 66 in the connecting parts 61a, 61b, 62c, and 62d, it is possible to prevent the occurrence of overlit points caused by the light immediately after being guided. For example, the prisms 66 that are provided in the upper part 61 and the lower part 62 may have a tapered shape toward both sides in the left-right direction from the center side. Specifically, the prisms 66 are tapered from the outer peripheral side toward the inner peripheral side. Because the light guided by the guide portion 65 more easily reaches the outer peripheral side of the upper part 61 and the lower part 62, it is possible to efficiently suppress overlit points by making the outer peripheral side of the prism 66 narrow. Note that, in the left part 63 and the right part 64, the prisms 66 can be provided over substantially the entire area between the upper guide portions 65a and 65b and the lower guide portions 65c and 65d in the circumferential direction. As a result, it becomes easier for internal reflection of the light to occur in the left part 63 and the right part 64.

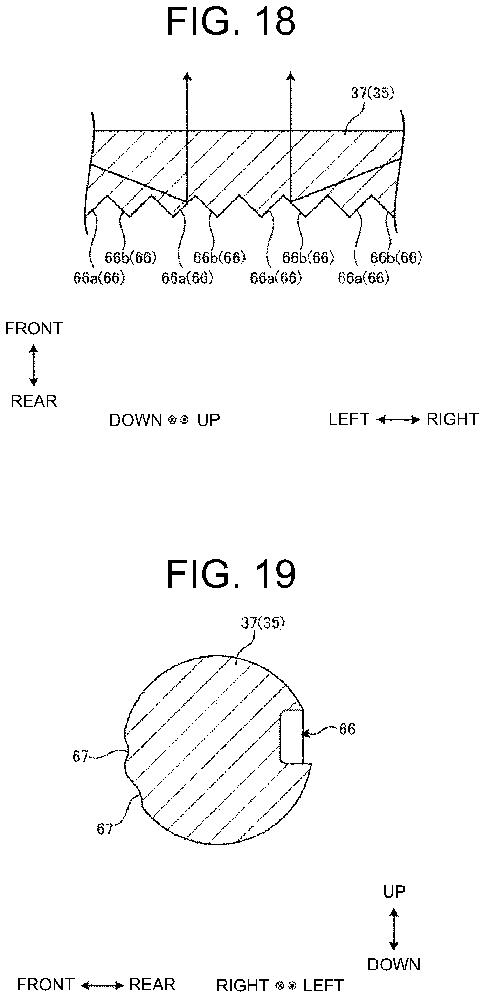

FIG. 18 is a diagram illustrating a configuration along a cross-section of G-G in FIG. 17. As shown in FIG. 18, the prisms 66 includes a first prism 66a, which internally reflects the light arriving from one side in the circumferential direction, and a second prism 66b, which internally reflects the light arriving from the other side in the circumferential direction. Note that, although FIG. 18 shows a cross-section of the upper part 61, the lower part 62, the left part 63, and the right part 64 are similarly configured such that the prism 66 has a first prism 66a and a second prism 66b.

The emblem light-guiding portion 37 has annular concave portions 67 along the circumferential direction on the front (front side) surface. A plurality of concave portions 67 are provided from the inner peripheral side toward the outer peripheral side. In the present embodiment, two concave portions 67 are provided. FIG. 19 is a diagram showing a configuration along an H-H cross section in FIG. 16. FIG. 19 shows a cross-section taken along a plane that is perpendicular to the circumferential direction. As shown in FIG. 19, the emblem light-guiding portion 37 has a shape based on a circle in a cross-sectional view. The concave portions 67 has a shape that is curved toward the rear (back side) in a cross-sectional view. As a result of providing the concave portions 67, the light that is internally reflected toward the vehicle front side by the prisms 66 is refracted, mixed, and emitted toward the vehicle front side. As a result, light can be emitted such that the brightness becomes uniform.

The emblem light-emitting portion 53 is disposed at the center of the lamp chamber R in the left-right direction. As the emblem light-emitting portion 53, for example, a light-transmitting member that transmits light, such as an inner lens, is used. The emblem light-emitting portion 53 is held by an emblem holding portion 44. The emblem holding portion 44 is attached to the inner panel 40.

The emblem light-emitting portion 53 has a rear surface 53r and a front surface 53f. The light that has been emitted from the emblem light-guiding portion 37 of the light-guiding body 35 enters the rear surface 53r. The light that has entered from the rear surface 53r is emitted from the front surface 53f. The emblem light-emitting portion 53 adopts a light-emitting state as a result of emitting light from the front surface 53f.

The emblem light-emitting portion 53 is connected to the end portions of the left and right upper clearance light-emitting portions 51 and lower clearance light-emitting portion 52 on the inner side of the vehicle. The emblem light-emitting portion 53 emits light at the same timing as the left and right upper clearance light-emitting portions 51 and lower clearance light-emitting portions 52. In the present embodiment, for example, the emblem light-emitting portion 53 has an annular shape when viewed from the front side, and is arranged in the periphery of the emblem 57. The shape of the emblem light-emitting portion 53 when viewed from the front side is not limited to an annular shape, and can be another shape, pattern, or the like.

The emblem holding portion 44 holds the emblem light-guiding portion 37 and the emblem light-emitting portion 53 with spacing in the vehicle front-rear direction. For example, the emblem holding portion 44 has a cylindrical shape, and has an oval shape in a front view. The emblem holding portion 44 is provided so as to make contact with an outer peripheral portion of the emblem light-guiding portion 37.

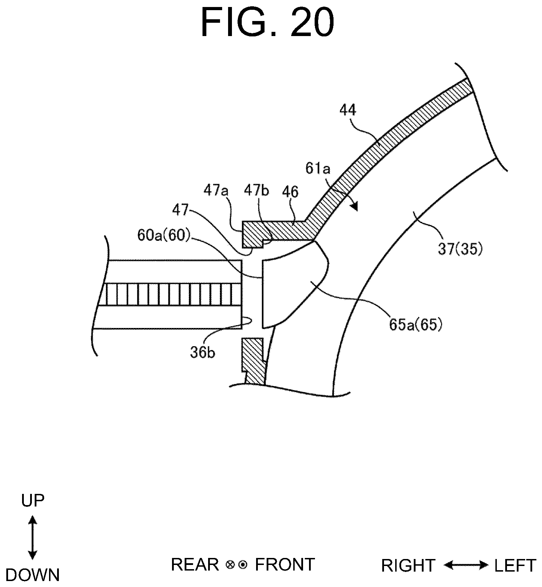

FIG. 20 is a diagram showing enlarged a portion of the emblem light-emitting unit 32. FIG. 20 shows a configuration of the part in which an incident surface 60 is provided. Although FIG. 20 shows the incident surface 60a as an example, the other incident surfaces 60b, 60c, and 60d have the same configuration. The part of the emblem light-guiding portion 37 in which the incident surface 60a and the upper guide portion 65a are provided has a protrusion portion 46. The protrusion portion 46 has a cylindrical shape, and is provided so as to cover the incident surface 60a and the upper guide portion 65a. The protrusion portion 46 is provided protruding on the left side so as to correspond to the orientation of the incident surface 60a. The protrusion portion 46 has a cover portion 47 on a front end in the protruding direction. The cover portion 47 is formed so as to protrude from the front end of the protrusion portion 46 in the protruding direction toward the inner peripheral side.

The cover portion 47 is disposed between the incident surface 60a and the end surface 36b of the clearance light-guiding portion 36. In this case, the end surface 36b of the clearance light-guiding portion 36 is disposed on the same plane as an end surface 47a of the cover portion 47 in the protruding direction, or further toward the left side than the end surface 47a. That is, the clearance light-guiding portion 36 is disposed on the outer side of the part surrounded by the protrusion portion 46 and the cover portion 47.

Furthermore, the incident surface 60a is disposed on the same plane as a rear surface 47b, which is the surface of the cover portion 47 on the opposite side to the end surface 47a in the left-right direction, or further toward the right side than the rear surface 47b. That is, the incident surface 60a and the upper guide portion 65a are disposed on the inner side of the part surrounded by the protrusion portion 46 and the cover portion 47.

As a result of such an arrangement, in a state where the end surface 36b of the clearance light-guiding portion 36 and the incident surface 60a are facing each other with spacing, the cover portion 47 is disposed so as to surround the sides of spacing part between the end surface 36b and the incident surface 60a. Therefore, the cover portion 47 can suppress leakage of light from the end surface 36b and the incident surface 60a to the outside.

The emblem 57 is held by the emblem holding portion 44. The emblem 57 is disposed from the inner peripheral portion of the emblem light-guiding portion 37 to the inner peripheral portion of the emblem light-emitting portion 53. The emblem 57 blocks the light emitted from the inner peripheral side of the emblem light-guiding portion 37 toward the inner side in the radial direction. For this reason, it is possible to suppress light from an unintended direction from entering the emblem light-emitting portion 53.

The turn lamp unit 33 is disposed in the lamp chamber R, and further on the outer side of the vehicle than each of the left and right headlight units 20. The turn lamp unit 33 includes light sources 38. As the light sources 38, for example, semiconductor light sources such as LEDs, or laser light sources may be used. The light sources 38 are disposed such that a light-emitting surface 38a faces the vehicle front side. The light sources 38 emit light from the light-emitting surface 38a toward the vehicle front side. For example, three light sources 38 are provided on each of the left and right sides of the lamp chamber R. On each of the left and right sides, the three light sources 38 are disposed side-by-side from the upper to lower side of the substrate 39.

The turn lamp unit 33 includes turn light-emitting portions 54 on the left and right. As the turn light-emitting portions 54, for example, light-transmitting members that transmit light, such as inner lenses, are used. The turn light-emitting portions 54 are disposed extending in the up-down direction from a position corresponding to the end portions of the upper clearance light-emitting portions 51 on the outer side of the vehicle to a position corresponding to the end portions of the lower clearance light-emitting portions 52 on the outer side of the vehicle. Note that the light-blocking portions 45 are each provided between the turn light-emitting portions 54 and the end portions of the upper clearance light-emitting portions 51 on the outer side of the vehicle, and between the turn light-emitting portions 54 and the end portions of the lower clearance light-emitting portions 52 on the outer side of the vehicle. The turn light-emitting portions 54 emit light due to the light emitted from the light sources 38. The turn light-emitting portions 54 are provided protruding from the inner panel 40 toward the vehicle front side. The turn light-emitting portions 54 are provided in a state where a side surface 54e and a front surface 54f are visible from the outside.

The turn light-emitting portions 54 have the rear surface 54r disposed facing the light-emitting surface 38a of the light sources 38. The light emitted from the light-emitting surfaces 38a enters the rear surface 54r. The light that has entered from the rear surface 54r is emitted from the front surface 54f. The turn light-emitting portion 54 adopts a light-emitting state as a result of emitting light from the front surface 54f.

The inner panel 40 is disposed spanning both sides of the lamp chamber R in the left-right direction. The inner panel 40 includes the base portion 41, upper frame portions 42, and lower frame portions 43. The base portion 41 is disposed perpendicular to, or intersecting, the vehicle front-rear direction. In the lamp chamber R, the base portion 41 is disposed so as to cover the periphery of the irradiation portions 24 of the low beam unit 21, the irradiation portions 26 of the high beam unit 22, the upper clearance light-emitting portions 51, the lower clearance light-emitting portions 52, the emblem light-emitting portion 53, and the turn light-emitting portions 54.

The base portion 41 has opening portions 41a, 41b, 41c, 41d, and 41e. The opening portions 41a are provided in positions corresponding to the irradiation portions 24 of the low beam unit 21 and the irradiation portions 26 of the high beam unit 22. The opening portions 41b are provided in positions corresponding to the upper clearance light-emitting portions 51. The upper clearance light-emitting portions 51 pass through the opening portions 41b in the vehicle front-rear direction, and are provided so as to protrude from the opening portion 41b toward the vehicle front side. The opening portions 41c are provided in positions corresponding to the lower clearance light-emitting portions 52. The lower clearance light-emitting portion 52 pass through the opening portion 41c in the vehicle front-rear direction, and are provided so as to protrude from the opening portions 41c toward the vehicle front side. The opening portion 41d is provided in a position corresponding to the emblem light-emitting portion 53. The opening portions 41e are provided in positions corresponding to the turn light-emitting portions 54.

The upper frame portions 42 are provided so as to protrude from a lower edge portion of the opening portions 41b of the base portion 41 toward the vehicle front side. The upper frame portions 42 are provided spanning the entire opening portion 41b in the left-right direction. The upper frame portions 42 are disposed along the lower surface 51d of the upper clearance light-emitting portions 51. The upper frame portions 42 are provided along each of the first horizontal portion 51a, the inclined portion 51b, and the second horizontal portion 51c of the upper clearance light-emitting portions 51. In other words, the upper clearance light-emitting portions 51 have the entire lower surface 51d covered by the upper frame portion 42 in the left-right direction. The upper clearance light-emitting portions 51 are provided in a state where the upper surface 51e and the front surface 51f are visible from the outside. As shown in FIG. 14, the upper frame portion 42 has an end surface 42f on the front that is flush with the front surface 51f of the upper clearance light-emitting portions 51.

Furthermore, the lower frame portions 43 are provided so as to protrude from a lower edge portion of the opening portions 41c of the base portion 41 toward the vehicle front side. The lower frame portions 43 are provided spanning the entire opening portion 41c in the left-right direction. The lower frame portions 43 are disposed along the lower surface 52d of the lower clearance light-emitting portions 52. The lower frame portions 43 are provided along each of the first horizontal portion 52a, the inclined portion 52b, and the second horizontal portion 52c of the lower clearance light-emitting portions 52. In other words, the lower clearance light-emitting portions 52 have the entire lower surface 52d covered by the lower frame portion 43 in the left-right direction. The lower clearance light-emitting portions 52 are provided in a state where the upper surface 52e and the front surface 52f are visible from the outside. As shown in FIG. 14, the lower frame portion 43 has an end surface 43f on the front that is flush with the front surface 52f of the lower clearance light-emitting portions 52.

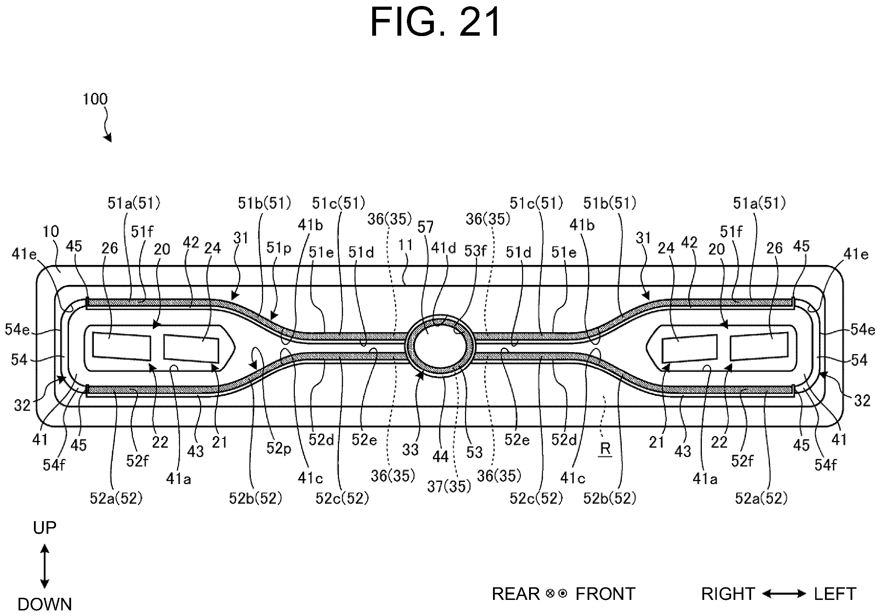

Next, an operation of the vehicle lighting fixture 100 configured as described above will be described. FIGS. 21 to 23 are diagrams showing an example of a state where the vehicle lighting fixture 100 has been illuminated. FIGS. 21 to 23 show a state where the vehicle lighting fixture 100 has been viewed from the front side. In a case where a signal to illuminate each unit of the vehicle lighting fixture 100 is supplied from the vehicle side, the vehicle lighting fixture 100 acquires the signal from the vehicle. For example, in a case where a signal to illuminate the clearance lamp unit 31 is acquired, the vehicle lighting fixture 100 performs a light emission control of the light sources 34 based on the signal. As a result of the light emission control, light is emitted from the light sources 34. The light emitted from the light sources 34 is guided by the clearance light-guiding portion 36 of the light-guiding body 35, and a portion of the light is emitted toward the upper clearance light-emitting portions 51 and the lower clearance light-emitting portion 52. As shown in FIG. 21, as a result of the light entering the upper clearance light-emitting portions 51, the upper surface 51e and the front surface 51f of the upper clearance light-emitting portions 51 emit light. As a result of the light entering the lower clearance light-emitting portions 52, the upper surface 52e and the front surface 52f of the lower clearance light-emitting portions 52 emit light. At this time, a pattern corresponding to the upper patterns 51p can be visually recognized on the upper surface 51e of the upper clearance light-emitting portions 51. Furthermore, a pattern corresponding to the lower patterns 52p can be visually recognized on the upper surface 52e of the lower clearance light-emitting portions 52. In this way, a light-emitting state having high designability can be achieved.

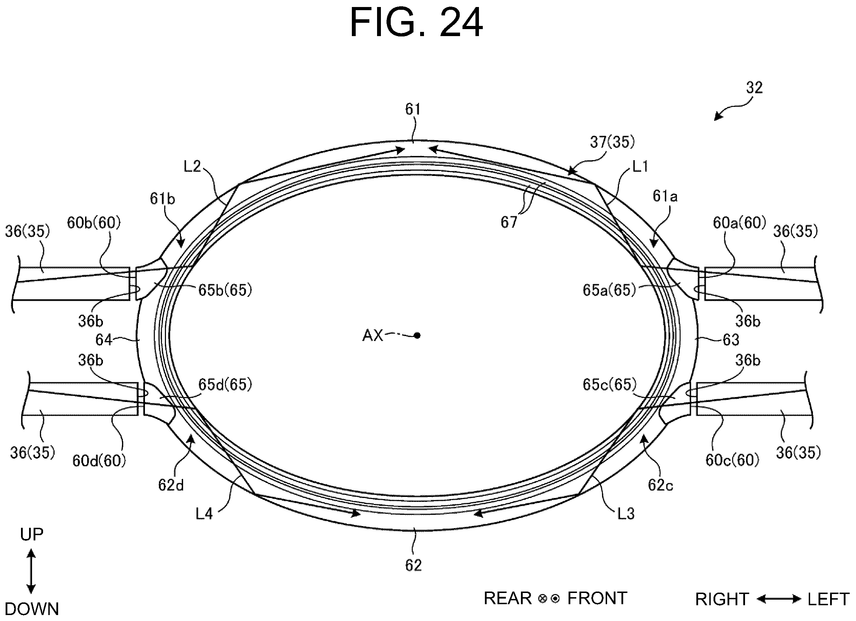

Furthermore, a portion of the light that is guided by the clearance light-guiding portion 36 enters the incident surfaces 60 of the emblem light-guiding portion 37 from the end surfaces 36b. FIG. 24 is a diagram showing an example of light that is guided by the emblem light-guiding portion 37. As shown in FIG. 24, in the emblem light-guiding portion 37, the light that enters from the incident surfaces 60a and 60b on the upper side of the central axis AX is guided toward the upper part 61, which is on the upper side, by each of the upper guide portions 65a and 65b.

For example, the light L1 that enters the incident surface 60a is guided to the upper part 61 by the upper guide portion 65a. The light L1 that has been guided by the upper part 61 travels in a clockwise direction in the emblem light-guiding portion 37 from the right part 64, the lower part 62, to the left part 63, and then returns to the upper part 61. In this way, the light L1 travels so as to circulate clockwise in the emblem light-guiding portion 37.

Furthermore, the light L2 that enters the incident surface 60b is guided to the upper part 61 by the upper guide portion 65b. The light L2 that has been guided by the upper part 61 travels in an anticlockwise direction in the emblem light-guiding portion 37 from the left part 63, the lower part 62, to the right part 64, and then returns to the upper part 61. In this way, the light L2 travels so as to circulate anticlockwise in the emblem light-guiding portion 37.

In addition, the light L3 that enters the incident surface 60c is guided to the lower part 62 by the lower guide portion 65c. The light L3 that has been guided by the lower part 62 travels in an anticlockwise direction in the emblem light-guiding portion 37 from the right part 64, the upper part 61, to the left part 63, and then returns to the lower part 62. In this way, the light L3 travels so as to circulate anticlockwise in the emblem light-guiding portion 37.

For example, the light L4 that enters the incident surface 60d is guided to the lower part 62 by the lower guide portion 65d. The light L4 that has been guided by the lower part 62 travels in a clockwise direction in the emblem light-guiding portion 37 from the left part 63, the upper part 61, to the right part 64, and then returns to the lower part 62. In this way, the light L4 travels so as to circulate clockwise in the emblem light-guiding portion 37.

As described above, the light that has entered from the incident surfaces 60a, 60b, 60c, and 60d and travels inside the emblem light-guiding portion 37 includes the light L1 and L4 that circulates in a clockwise direction, and the light L2 and L3 that circulates in an anticlockwise direction. When the light (L1 to L4) reaches the prisms 66, the light is internally reflected by the prisms 66 toward the vehicle front side. The prisms 66 include a first prism 66a and a second prism 66b. Therefore, for example, the light L1 and L4 that circulates in a clockwise direction is internally reflected by the first prism 66a. Furthermore, the light L2 and L3 that circulates in an anticlockwise direction is internally reflected by the second prism 66b. In this way, the light arriving from both sides in the circumferential direction (both a clockwise direction and an anticlockwise direction) can each be internally reflected toward the vehicle front side.

Note that the light that has entered from the incident surfaces 60 can sometimes reach the incident surfaces 60 when circulating in the emblem light-guiding portion 37. At this time, because the incident surfaces 60 and the end surfaces 36b of the clearance light-guiding portion 36 are provided with spacing, it is possible to suppress leakage of the light from the incident surfaces 60 to the outside.

The light internally reflected by the prisms 66 is emitted from the front side of the emblem light-guiding portion 37 toward the vehicle front side. Because the concave portions 67 are formed on the front side of the emblem light-guiding portion 37, the light emitted from the front side of the emblem light-guiding portion 37 including the concave portions 67 becomes mixed. As a result, the light is emitted in a state where the brightness is uniform.

The light guided by the emblem light-guiding portion 37 and emitted toward the vehicle front side enters the emblem light-emitting portion 53. As shown in FIG. 21, the emblem light-emitting portion 53 emits light as a result of the light that enters the emblem light-emitting portion 53. In this way, the emblem light-emitting portion 53 emits light at the same timing as the upper clearance light-emitting portions 51 and lower clearance light-emitting portions 52.

Furthermore, for example, in a case where a signal is acquired that causes the low beam unit 21 and the high beam unit 22 to be illuminated, the vehicle lighting fixture 100 performs a light emission control of the light sources 23 of the low beam unit 21 and the light sources 25 of the high beam unit 22 based on the signal. The light emitted from the light sources 23 and 25 is subjected to a light distribution control by the irradiation portions 24 and 26, and is then irradiated toward the vehicle front side. As a result, a low beam pattern and a high beam pattern are formed on the vehicle front side.

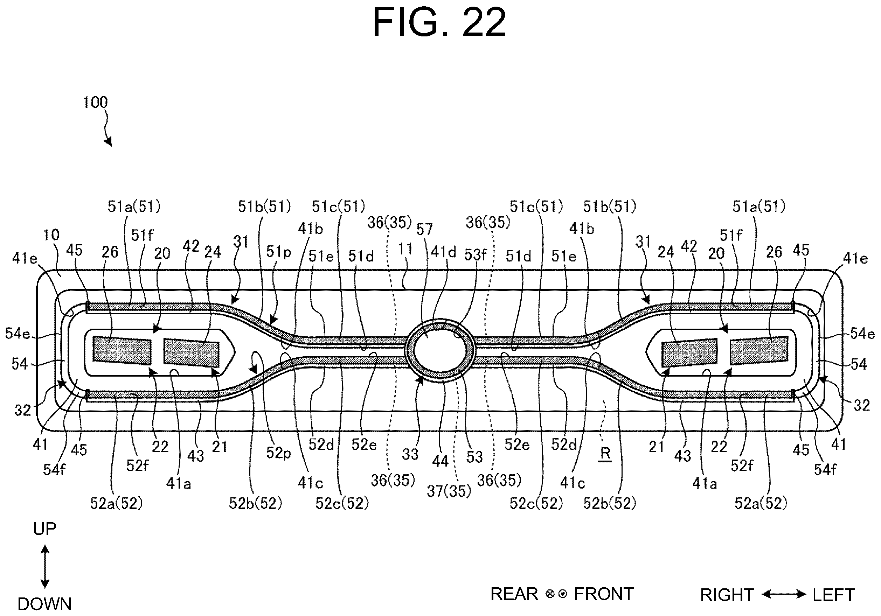

In the vehicle lighting fixture 100, when the low beam unit 21 and the high beam unit 22 are illuminated, a control is sometimes performed such that the clearance lamp unit 31 is also illuminated. In such a case, as shown in FIG. 22, at the same time light is irradiated toward the vehicle front side from the irradiation portions 24 and 26, the upper clearance light-emitting portions 51, the lower clearance light-emitting portions 52, and the emblem light-emitting portion 53 emit light. In the present embodiment, the upper frame portions 42 are provided along the lower surface 51d of the upper clearance light-emitting portions 51, and the lower frame portions 43 are provided along the lower surface 52d of the lower clearance light-emitting portions 52. For this reason, the light from the irradiation portions 24 and 26 and the light emitted by the upper clearance light-emitting portions 51 and the lower clearance light-emitting portion 52 are clearly distinguished when visually observed.

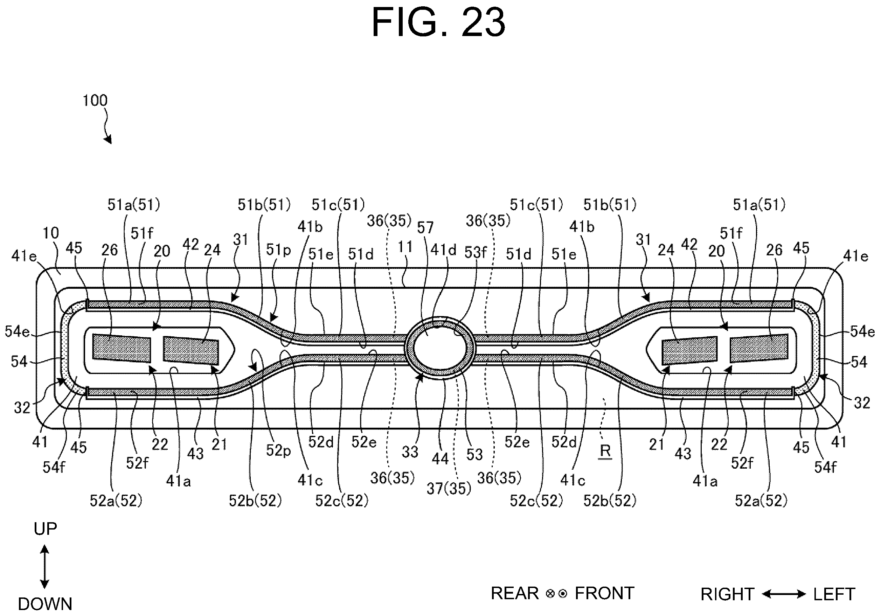

Furthermore, for example, in a case where a signal to illuminate the turn lamp unit 33 is acquired, the vehicle lighting fixture 100 performs a light emission control of the light sources 38 based on the signal. As a result of the light emission control, light is emitted from the light sources 38. The light emitted from the light sources 38 is emitted toward the turn light-emitting portions 54. As shown in FIG. 23, the front surface 54f of the turn light-emitting portion 54 emits light due to the light entering the turn light-emitting portion 54. In the present embodiment, the turn light-emitting portions 54 are disposed so as to extend in the up-down direction from a position corresponding to the end portions of the upper clearance light-emitting portions 51 on the outer side of the vehicle to a position corresponding to the end portions of the lower clearance light-emitting portions 52 on the outer side of the vehicle. As a result, for example, in a case where the turn light-emitting portions 54 emits light in a state where the upper clearance light-emitting portions 51 and the lower clearance light-emitting portions 52 are emitting light, the front surface 54f of the turn light-emitting portions 54 emits light so as to connect the front surface 51f of the upper clearance light-emitting portions 51 and the front surface 52f of the lower clearance light-emitting portions 52. In this way, a light-emitting state having high designability can be achieved. In addition, the turn light-emitting portions 54 are provided in a state where the side surface 54e is visible from the outside, and the front surface 54f is disposed so as to protrude from the inner panel 40 toward the vehicle front side of the lamp chamber R. As a result, in the light-emitting state, the region protruding toward the vehicle front side from the inner panel 40 appears to be emitting light. In this way, a high designability can be achieved in the light-emitting state.

As described above, the emblem light-emitting unit 32 according to the present embodiment includes: the emblem light-guiding portion 37 formed in an annular shape, which is formed with incident surfaces 60 at single locations at positions on each of the left and right sides and offset above and below the central axis AX, and facing toward the outer side in the radial direction in the left-right direction, and which guides the light that enters from the incident surfaces 60 and emits the light on the front side in the vehicle front-rear direction; and the emblem light-emitting portion 53 disposed on the front side of the emblem light-guiding portion 37, which is formed in an annular shape along the shape of the emblem light-guiding portion 37, and which emits the light emitted from the emblem light-guiding portion 37 toward the front side.

According to such a configuration, because the emblem light-guiding portion 37, which guides the light that has entered from the incident surfaces 60 and emits the light toward the vehicle front side, is formed in an annular shape, it is possible to guide the light such that the incident light is circulated in an annular shape, and then emitted toward the vehicle front side. As a result, light with a uniform brightness in the circumferential direction can be emitted toward the inner lens. Therefore, as a result of the light emitted from the inner lens, it is possible to emit light such that the brightness is uniform in the circumferential direction. In addition, because the incident surfaces 60 are formed at single locations at positions on each of the left and right sides and offset in the up-down direction with respect to the central axis AX, it is possible to cause the light that has entered from the incident surfaces 60 on the upper side to travel toward the upper side, and cause the light that has entered from the incident surfaces 60 on the lower side to travel toward the lower side. As a result, the light can be efficiently circulated in the circumferential direction.

In the emblem light-emitting unit 32 described above, the emblem light-guiding portion 37 has the upper guide portions 65a and 65b that upwardly guide light entering from the incident surfaces 60a and 60b on the upper side with respect to the central axis AX, and the lower guide portions 65c and 65d that downwardly guide light entering from the incident surfaces 60c and 60d on the lower side with respect to the central axis AX. According to such a configuration, it is possible to cause the light that has entered from the incident surfaces 60a and 60b on the upper side to travel toward the upper side with more certainty, and to cause the light that has entered from the incident surfaces 60c and 60d on the lower side to travel toward the lower side with more certainty. As a result, the light can be circulated in the circumferential direction with more certainty.

The emblem light-emitting unit 32 described above further includes the emblem holding portion 44, which holds the emblem light-guiding portion 37 and the emblem light-emitting portion 53 with spacing in the vehicle front-rear direction. According to such a configuration, the emblem light-guiding portion 37 and the emblem light-emitting portion 53 can be held with certainty.

The emblem light-emitting unit 32 described above further includes the emblem 57, which is disposed from the inner peripheral portion of the emblem light-guiding portion 37 to the inner peripheral portion of the emblem light-emitting portion 53. According to such a configuration, the light emitted from the emblem light-guiding portion 37 toward the inner side in the radial direction can be blocked by the emblem 57. As a result, it is possible to suppress light from an unintended direction from entering the emblem light-emitting portion 53.

In the emblem light-emitting unit 32 described above, the emblem light-guiding portion 37 has the prisms 66 that internally reflect light traveling inside toward the front side. According to such a configuration, it is possible to efficiently emit light from the emblem light-guiding portion 37 toward the front side.

In the emblem light-emitting unit 32 described above, the prisms 66 are provided along the circumferential direction on the surface of the emblem light-guiding portion 37 on the back side so as to leave regions open for the connecting parts 61a, 61b, 62c, 62d. According to such a configuration, the occurrence of overlit points in the connecting parts 61a, 61b, 61c, and 61d can be suppressed.

In the emblem light-emitting unit 32 described above, the prisms 66 are consecutively provided in the circumferential direction of the emblem light-guiding portion 37 in each of the upper part 61, which is positioned between the incident surfaces 60 on each of the left and right sides on the upper side, the lower part 62, which is positioned between the incident surfaces 60 on each of the left and right sides on the upper side, the left part 63, which is positioned between the incident surfaces 60 on the upper and lower sides on the left side, and the right part 64, which is positioned between the incident surfaces 60 on the upper and lower sides on the right side. According to the present configuration, light can be efficiently emitted toward the front side in each of the upper part 61, the lower part 62, the left part 63, and the right part 64.

In the emblem light-emitting unit 32 described above, the prisms 66 are formed in a recessed state from the surface of the emblem light-guiding portion 37 on the back side toward the front side, and the depth at which the prisms 66 are provided in the left part 63 and the right part 64 is deeper than that at which the prisms 66 are provided in the upper part 61 and the lower part 62. According to such a configuration, internal reflection due to the prisms 66 occurs more easily in the left part 63 and the right part 64 than in the upper part 61 and the lower part 62. The brightness of the light that is emitted from the left part 63 and the right part 64 toward the front side can be ensured.

In the emblem light-emitting unit 32 described above, the prisms 66 are provided in a part of the surface of the emblem light-guiding portion 37 on the back side that is closer to the outer peripheral side. The light that travels inside the annular emblem light-guiding portion 37 more easily reaches the outer peripheral side. As a result, by providing the prisms 66 in the part of the surface of the emblem light-guiding portion 37 on the back side that is closer to the outer peripheral side, it is possible to efficiently internally reflect the light in the prisms 66.

In the emblem light-emitting unit 32 described above, the prisms 66 have the first prism 66a, which internally reflects light arriving from one side in the circumferential direction, and the second prism 66b, which internally reflects light arriving from another side in the circumferential direction. As a result of such a configuration, the light circulating in both directions in the circumferential direction can be internally reflected toward the front side by the prisms 66.

In the emblem light-emitting unit 32 described above, the emblem light-guiding portion 37 has the annular concave portions 67 along the circumferential direction in the surface on the front side, and the concave portion 67 has a shape that is curved toward the back side in a cross-sectional view along a plane perpendicular to the circumferential direction. According to such a configuration, because it becomes easier for the light emitted from the emblem light-guiding portion 37 to mix, it becomes possible to emit light in a state where the brightness is uniform.

The vehicle lighting fixture according to the present invention includes the emblem light-emitting unit 32, the light sources, and the clearance light-guiding portion 36 that has the end surfaces 36b, which face the incident surfaces 60 of the emblem light-guiding portion 37 with spacing therebetween, and guides the light from the light source 38 and emits the light from the end surfaces 36b toward the incident surfaces 60 of the emblem light-guiding portion 37, while also emitting the light from the light sources 38 on the front side toward the clearance lamp unit 31, which is another optical member that is different from the emblem light-emitting unit 32, before the light is guided to the end surface 36b.

According to such a configuration, because the light source 38 for supplying light toward the clearance lamp unit 31, which is another unit, is used to guide light to the emblem light-emitting unit 32, it is not necessary to use a dedicated light source for the emblem light-emitting unit 32. As a result, it is possible to reduce the number of components.

In the vehicle lighting fixture described above, the emblem light-guiding portion 37 is accommodated in the emblem holding portion 44, which surrounds the outer peripheral side, and the emblem holding portion 44 includes the cover portion 47 that covers the side direction of a part between the incident surfaces 60 of the emblem light-guiding portion 37 and the end surfaces 36b of the clearance light-guiding portion 36. According to such a configuration, it is possible to suppress the leakage of light from between the end surfaces 36b of the clearance light-guiding portion 36 and the incident surfaces 60 of the emblem light-guiding portion 37.

The technical scope of the present invention is not limited to the embodiment described above, and can be modified as appropriate without departing from the spirit of the present invention. For example, in the embodiment described above, although a configuration in which the emblem light-emitting unit and the vehicle lighting fixture are provided on the front portion of the vehicle has been described as an example, the present invention is not limited to this. A configuration is possible in which the emblem light-emitting unit and the vehicle lighting fixture are provided in the rear portion of the vehicle. In this case, the front side becomes the vehicle rear side, and the back side becomes the vehicle front side.

Furthermore, in the configuration described above, although an example has been described in which the emblem light-guiding portion 37 and the emblem light-emitting portion 53 serve as the annular light-guiding body and the inner lens, the present invention is not limited to such a configuration.

### DESCRIPTION OF REFERENCE NUMERALS

AX Central axis
L1, L2, L3, L4 Light
R Lamp chamber
10 Housing
11 Outer lens
11r, 51r, 52r, 53r, 54r Rear surface
12 Light-guiding body cover
20 Headlight unit
21 Low beam unit
22 High beam unit
23, 25, 34, 38 Light source
24, 26 Irradiation portion
30 Lighting fixture unit
31 Clearance lamp unit
32 Emblem light-emitting unit
33 Turn lamp unit
34a, 38a Light-emitting surface
35 Light-guiding body
36 Clearance light-guiding portion
36a, 60 Incident surface
36b, 42f, 43f End surface
37 Emblem light-guiding portion
39 Substrate
40 Inner panel
41 Base portion
41a, 41b, 41c, 41d, 41e Opening portion
42 Upper frame portion
43 Lower frame portion
44 Emblem holding portion
45 Light-blocking portion
46 Protrusion portion
47 Cover portion
47b Rear surface
51 Upper clearance light-emitting portion
51a, 52a First horizontal portion
51b, 52b Inclined portion
51c, 52c Second horizontal portion
51d, 52d Lower surface
51e, 52e Upper surface
51f, 52f, 53f, 54f Front surface
51p Upper pattern
52 Lower clearance light-emitting portion
52p Lower pattern
53 Emblem light-emitting portion
53a Plate-shaped portion
53b Cylindrical portion
53e Outer peripheral surface
53g Projection portion
53i Inner peripheral surface
54 Turn light-emitting portion
54e Side surface
55 Light-blocking pattern
57 Emblem
61 Upper part
61a, 61b, 62c, 62d Connecting part
62 Lower part
63 Left part
64 Right part
65 Guide portion
65a, 65b Upper guide portion
65c, 65d Lower guide portion
66 Prism
66a First prism
66b Second prism
67 Concave portion
100 Vehicle lighting fixture

## Claims

1. A vehicle lighting fixture (100), comprising:
a light-emitting body (37);
an inner lens (53) that emits light from the light-emitting body (37) to at least a front side in a vehicle front-rear direction; and
a light-transmitting member (11) that is disposed at a position away the inner lens (53) on the front side, and which is formed with a light-blocking pattern that blocks a portion of light emitted from the inner lens (53).

2. The vehicle lighting fixture (100) according to claim 1, wherein
the light-blocking pattern is formed on a surface of the light-transmitting member (11) that faces the inner lens (53).

3. The vehicle lighting fixture (100) according to claim 1, wherein
the inner lens (53) has a shape extending in a vehicle front-rear direction, and emits light from an end surface disposed to an end portion on a front side in the vehicle front-rear direction and a part of a side surface extending from the end surface toward a back side, the part being connected to the end surface.

4. The vehicle lighting fixture (100) according to claim 3, further comprising
an inner panel (40) that covers the light-emitting body (37) and a portion of the inner lens (53), wherein
the inner lens (53) is provided with a part of the side surface that emits light protruding from the inner panel (40) toward the front side.

5. The vehicle lighting fixture (100) according to claim 1, wherein
the light-transmitting member (11) has the light-blocking pattern disposed on an inner side of the inner lens (53) in a front view.

6. The vehicle lighting fixture (100) according to claim 1, further comprising
a housing that accommodates the light-emitting body (37) and the inner lens (53), wherein
the light-transmitting member (11) is an outer lens that forms a lamp chamber together with the housing.

7. The vehicle lighting fixture (100) according to claim 1, further comprising
a light source (23, 25, 34, 38), and
a rod-shaped light-guiding body (35) having an opposing surface that faces the light-emitting body (37), and which guides light from the light source (23, 25, 34, 38) and emits the light from the opposing surface to the light-emitting body (37), while also emitting the light from the light source (23, 25, 34, 38) from a side surface toward another optical member that is different from the light-emitting body (37) before the light is guided to the opposing surface, wherein
the light-emitting body (37) emits light due to light emitted from the rod-shaped light-guiding body (35).

8. A lighting fixture unit (30) comprising:
an annular light-guiding body (37) formed in an annular shape, which is formed with incident surfaces at single locations at positions on each of a left and right side and offset above and below a central axis, and facing toward an outer side in a radial direction in a left-right direction, and which guides light that enters from the incident surfaces and emits the light on a front side in a vehicle front-rear direction; and
an inner lens (53) disposed on a front side of the annular light-guiding body (37), which is formed in an annular shape along a shape of the annular light-guiding body (37), and which emits the light emitted from the annular light-guiding body (37) toward a front side.

9. The lighting fixture unit (30) according to claim 8, wherein
the annular light-guiding body (37) has an upper guide portion that upwardly guides light entering from the incident surface on an upper side with respect to the central axis, and a lower guide portion that downwardly guides light entering from the incident surface on a lower side with respect to the central axis.

10. The lighting fixture unit (30) according to claim 8, further comprising
a holding portion (44) that holds the annular light-guiding body (37) and the inner lens (53) with spacing in a vehicle front-rear direction.

11. The lighting fixture unit (30) according to claim 10, further comprising
a light-blocking portion disposed from an inner peripheral portion of the annular light-guiding body (37) to an inner peripheral portion of the inner lens (53).

12. The lighting fixture unit (30) according to claim 8, wherein
the annular light-guiding body (37) has prisms (66) that internally reflect light traveling inside toward a front side.

13. The lighting fixture unit (30) according to claim 12, wherein
the prisms (66) are provided along a circumferential direction of a surface of the annular light-guiding body (37) on a back side so as to leave spaces open in parts where the incident surfaces are provided.

14. The lighting fixture unit (30) according to claim 13, wherein
the prisms (66) are consecutively provided in the circumferential direction of the annular light-guiding body (37) in each of an upper part, which is positioned between the incident surfaces on each of the left and right side on an upper side, a lower part, which is positioned between the incident surfaces on each of the left and right side on a lower side, a left part, which is positioned between the incident surfaces on the upper and lower sides on the left side, and a right part, which is positioned between the incident surfaces on the upper and lower sides on the right side.

15. The lighting fixture unit (30) according to claim 14, wherein
the prisms (66) are formed in a recessed state from a surface of the annular light-guiding body (37) on a back side to a front side, and
a depth at which the prisms (66) are provided in the left part and the right part is deeper than that at which the prisms (66) are provided in the upper part and the lower part.

16. The lighting fixture unit (30) according to claim 13, wherein
the prisms (66) are provided in parts of a surface of the annular light-guiding body (37) on a back side that is closer to an outer peripheral side.

17. The lighting fixture unit (30) according to claim 12, wherein
the prisms (66) have a first prism, which internally reflects light arriving from one side in a circumferential direction, and a second prism, which internally reflects light arriving from another side in a circumferential direction.

18. The lighting fixture unit (30) according to claim 8, wherein
the annular light-guiding body (37) has an annular concave portion along a circumferential direction in a surface on a front side, and
the concave portion has a shape that is curved toward a back side in a cross-sectional view along a plane perpendicular to the circumferential direction.

19. A vehicle lighting fixture (100) comprising:
the lighting fixture unit (30) according to claim 8;
a light source (23, 25, 34, 38);
and a rod-shaped light-guiding body (35) having an end surface that faces the incident surfaces of the annular light-guiding body (37) with spacing therebetween, guides light from the light source (23, 25, 34, 38) and emits the light from the end surface toward the incident surfaces of the annular light-guiding body (37), and which emits light from the light source (23, 25, 34, 38) toward a front side toward another unit that is different from the lighting fixture unit (30) before the light is guided to the end surface.

20. The vehicle lighting fixture (100) according to claim 19, wherein
the annular light-guiding body (37) is accommodated in a storage portion that surrounds an outer peripheral side, and
the storage portion has a cover portion that surrounds a side direction of a part between the incident surfaces of the annular light-guiding body (37) and the end surface of the rod-shaped light-guiding body (35).
